(19) Europäisches Patentamt
European Patent Office
Office européen des brevets

(11) **EP 4 521 671 A1**

(12) **EUROPEAN PATENT APPLICATION**
published in accordance with Art. 153(4) EPC

(43) Date of publication:
**12.03.2025 Bulletin 2025/11**

(21) Application number: **23807011.4**

(22) Date of filing: **18.05.2023**

(51) International Patent Classification (IPC):
*H04L 5/00* (2006.01)

(52) Cooperative Patent Classification (CPC):
**H04L 5/00**

(86) International application number:
**PCT/CN2023/094916**

(87) International publication number:
**WO 2023/222060 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.05.2022 CN 202210545847**

(71) Applicant: **Huawei Technologies Co., Ltd.
Shenzhen, Guangdong 518129 (CN)**

(72) Inventors:
• **GONG, Bo**
  **Shenzhen, Guangdong 518129 (CN)**
• **LIU, Chenchen**
  **Shenzhen, Guangdong 518129 (CN)**
• **GAN, Ming**
  **Shenzhen, Guangdong 518129 (CN)**
• **LI, Feng**
  **Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS BASED ON PHYSICAL PROTOCOL DATA UNIT**

(57)    A PPDU-based communication method and apparatus are disclosed, are used in a wireless local area network system that supports 802.11 series protocols such as a next-generation Wi-Fi protocol of IEEE 802.11ax, for example, 802.11be, Wi-Fi 7, or EHT, and a next-generation protocol of 802.11be, for example, Wi-Fi 8, and may be further used in a UWB-based wireless personal local area network system, a sensing (sensing) system, and the like. A transmit end generates a PPDU, and sends the PPDU on a first high frequency channel. Correspondingly, a receive end receives the PPDU on the first high frequency channel, and processes the PPDU. The first high frequency channel may include a first pilot subcarrier and a first data subcarrier, a quantity of first pilot subcarriers is greater than a quantity of second pilot subcarriers, and a quantity of first data subcarriers is equal to a quantity of second data subcarriers. This can effectively improve demodulation accuracy of the receive end.

FIG. 2

**Description**

This application claims priority to Chinese Patent Application No. 202210545847.2, filed with the China National Intellectual Property Administration on May 19, 2022 and entitled "PHYSICAL LAYER PROTOCOL DATA UNIT-BASED COMMUNICATION METHOD AND APPARATUS", which is incorporated herein by reference in its entirety.

**TECHNICAL FIELD**

This application relates to the field of communication technologies, and in particular, to a physical layer (physical, PHY) protocol data unit (PHY protocol data unit, PPDU)-based communication method and apparatus.

**BACKGROUND**

A wireless local area network (wireless local area network, WLAN) develops from 802.11a/g to 802.11n, 802.11ac, 802.11ax, 802.11be, and the like. An available frequency band used in the wireless local area network is extended from 2.4 GHz to 2.4 GHz/5 GHz and then to 2.4 GHz/5 GHz/6 GHz, a supported bandwidth is extended from 20 MHz to 320 MHz, and therefore, spectral efficiency and throughput of the wireless local area network are continuously improved. In a next-generation WLAN technology, a 45 GHz/60 GHz millimeter-wave band and another millimeter-wave band are introduced to further enhance a physical layer capability of the wireless local area network.

A method for sending a high frequency band signal may be shown as follows: A high frequency band signal obtained by extending a subcarrier spacing of a low frequency band signal is directly sent. To be specific, a quantity of pilot subcarriers used for the high frequency band signal is equal to a quantity of pilot subcarriers used for the low frequency band signal, a location of a pilot subcarrier used for the high frequency band signal corresponds to a location of a pilot subcarrier used for the low frequency band signal, a quantity of guard subcarriers used for the high frequency band signal is equal to a quantity of guard subcarriers used for the low frequency band signal, and a location of a guard subcarrier used for the high frequency band signal corresponds to a location of a guard subcarrier used for the low frequency band signal, to ensure that a process of processing a digital signal of the high frequency band signal is almost consistent with that of the low frequency band signal. This is friendly in chip design and implementation for a next-generation WLAN protocol that supports both a high frequency band and a low frequency band. The low frequency band signal may be understood as a signal in protocols for a low frequency band such as 802.11n, 802.11ac, 802.11ax, and 802.11be.

In the foregoing method, demodulation accuracy of a receive end needs to be improved.

**SUMMARY**

This application provides a PPDU-based communication method and an apparatus, to effectively improve demodulation accuracy of a receive end.

According to a first aspect, an embodiment of this application provides a PPDU-based communication method. The method is applied to a transmit end or a chip, the chip is used in the transmit end, and the method includes: generating a PPDU; and sending the PPDU on a first high frequency channel, where the first high frequency channel includes a first pilot subcarrier and a first data subcarrier, a discrete Fourier transform DFT size corresponding to the first high frequency channel is the same as a DFT size corresponding to a first low frequency channel, a quantity of first pilot subcarriers is greater than a quantity of second pilot subcarriers in the first low frequency channel, and a quantity of first data subcarriers is equal to a quantity of second data subcarriers in the first low frequency channel.

According to a second aspect, an embodiment of this application provides a physical layer protocol data unit PPDU-based communication method. The method is applied to a receive end or a chip, the chip is used in the receive end, and the method includes: receiving a PPDU on a first high frequency channel, where the first high frequency channel includes a first pilot subcarrier and a first data subcarrier, a discrete Fourier transform DFT size corresponding to the first high frequency channel is the same as a DFT size corresponding to a first low frequency channel, a quantity of first pilot subcarriers is greater than a quantity of second pilot subcarriers in the first low frequency channel, and a quantity of first data subcarriers is equal to a quantity of second data subcarriers in the first low frequency channel; and processing the PPDU.

In this embodiment of this application, it is ensured that the quantity of first pilot subcarriers is greater than the quantity of second pilot subcarriers, so that the receive end has a sufficient quantity of pilots to correct a frequency offset, thereby improving accuracy of demodulating data by the receive end. It is ensured that the quantity of first data subcarriers is equal to the quantity of second data subcarriers, so that processes of generating PPDUs by the transmit end can be almost consistent, thereby ensuring compatibility of a baseband chip on a low frequency band and a high frequency band. In a solution of directly extending a subcarrier spacing of a low frequency band signal to obtain a high frequency band signal and keeping a quantity of pilots unchanged, because interference of the high frequency band signal is greater than interference of the low frequency band signal, if the quantity of pilots does not change, the receive end may not have a sufficient quantity of pilots to correct a frequency offset. As a result, phase offset estimation of the receive end may be inaccurate, and a phase offset associated with a data subcarrier cannot be accurately compensated. This affects demodulation accuracy.

With reference to the second aspect, in a possible implementation, the processing the PPDU includes: obtaining, based on an index value of the first pilot subcarrier, a pilot signal in the PPDU on the first pilot subcarrier corresponding to the index value; and performing processing based on the pilot signal.

With reference to the second aspect, in a possible implementation, the performing processing based on the pilot signal includes at least one of the following: performing phase offset estimation and/or compensation based on the pilot signal; and performing frequency offset estimation and/or compensation based on the pilot signal.

With reference to the first aspect and the second aspect, in a possible implementation, the first pilot subcarrier is obtained by mapping, to the first high frequency channel, a second pilot subcarrier and a second guard subcarrier that are in the first low frequency channel.

In this embodiment of this application, the first pilot subcarrier is obtained by using the second pilot subcarrier and the second guard subcarrier. Compared with that in a protocol for a low frequency band, a change is small.

With reference to the first aspect and the second aspect, in a possible implementation, the index value of the first pilot subcarrier includes at least one of the following: an index value of the second guard subcarrier and an index value of the second pilot subcarrier.

With reference to the first aspect and the second aspect, in a possible implementation, index values of first pilot subcarriers include at least one of the following:

[-29, -21, -7, 7, 21];
[-29, -21, -7, 7, 21, 29];
[-30, -29, -21, -7, 7, 21, 29];
[-30, -29, -21, -7, 7, 21, 29, 30];
[-31, -30, -29, -21, -7, 7, 21, 29, 30];
[-31, -30, -29, -21, -7, 7, 21, 29, 30, 31]; and
[-32, -31, -30, -29, -21, -7, 7, 21, 29, 30, 31], where
[-21, -7, 7, 21] are the same as index values of second pilot subcarriers, and [-32, -31, -30, -29, 29, 30, 31] are the same as index values of second guard subcarriers.

With reference to the first aspect and the second aspect, in a possible implementation, index values of first pilot subcarriers include at least one of the following:

[-59, -53, -25, -11, 11, 25, 53];
[-59, -53, -25, -11, 11, 25, 53, 59];
[-60, -59, -53, -25, -11, 11, 25, 53, 59];
[-60, -59, -53, -25, -11, 11, 25, 53, 59, 60];
[-61, -60, -59, -53, -25, -11, 11, 25, 53, 59, 60];
[-61, -60, -59, -53, -25, -11, 11, 25, 53, 59, 60, 61];
[-62, -61, -60, -59, -53, -25, -11, 11, 25, 53, 59, 60, 61];
[-62, -61, -60, -59, -53, -25, -11, 11, 25, 53, 59, 60, 61, 62];
[-63, -62, -61, -60, -59, -53, -25, -11, 11, 25, 53, 59, 60, 61, 62];
[-63, -62, -61, -60, -59, -53, -25, -11, 11, 25, 53, 59, 60, 61, 62, 63]; and
[-64, -63, -62, -61, -60, -59, -53, -25, -11, 11, 25, 53, 59, 60, 61, 62, 63], where
[-53, -25, -11, 11, 25, 53] are the same as index values of second pilot subcarriers, and [-64, -63, -62, -61, -60, -59, 59, 60, 61, 62, 63] are the same as index values of second guard subcarriers.

With reference to the first aspect and the second aspect, in a possible implementation, index values of first pilot subcarriers include at least one of the following:

[-123, -103, -75, -39, -11, 11, 39, 75, 103];
[-123, -103, -75, -39, -11, 11, 39, 75, 103, 123];
[-124, -123, -103, -75, -39, -11, 11, 39, 75, 103, 123];
[-124, -123, -103, -75, -39, -11, 11, 39, 75, 103, 123, 124];
[-125, -124, -123, -103, -75, -39, -11, 11, 39, 75, 103, 123, 124];
[-125, -124, -123, -103, -75, -39, -11, 11, 39, 75, 103, 123, 124, 125];
[-126, -125, -124, -123, -103, -75, -39, -11, 11, 39, 75, 103, 123, 124, 125];

EP 4 521 671 A1

[-126, -125, -124, -123, -103, -75, -39, -11, 11, 39, 75, 103, 123, 124, 125, 126];
[-127, -126, -125, -124, -123, -103, -75, -39, -11, 11, 39, 75, 103, 123, 124, 125, 126];
[-127, -126, -125, -124, -123, -103, -75, -39, -11, 11, 39, 75, 103, 123, 124, 125, 126, 127]; and
[-128, -127, -126, -125, -124, -123, -103, -75, -39, -11, 11, 39, 75, 103, 123, 124, 125, 126, 127], where
[-103, -75, -39, -11, 11, 39, 75, 103] are the same as index values of second pilot subcarriers, and [-128, -127, -126, -125, -124, -123, 123, 124, 125, 126, 127] are the same as index values of second guard subcarriers.

With reference to the first aspect and the second aspect, in a possible implementation, index values of first pilot subcarriers include at least one of the following:

[-123, -116, -90, -48, -22, 22, 48, 90, 116];
[-123, -116, -90, -48, -22, 22, 48, 90, 116, 123];
[-124, -123, -116, -90, -48, -22, 22, 48, 90, 116, 123];
[-124, -123, -116, -90, -48, -22, 22, 48, 90, 116, 123, 124];
[-125, -124, -123, -116, -90, -48, -22, 22, 48, 90, 116, 123, 124];
[-125, -124, -123, -116, -90, -48, -22, 22, 48, 90, 116, 123, 124, 125];
[-126, -125, -124, -123, -116, -90, -48, -22, 22, 48, 90, 116, 123, 124, 125];
[-126, -125, -124, -123, -116, -90, -48, -22, 22, 48, 90, 116, 123, 124, 125, 126];
[-127, -126, -125, -124, -123, -116, -90, -48, -22, 22, 48, 90, 116, 123, 124, 125, 126];
[-127, -126, -125, -124, -123, -116, -90, -48, -22, 22, 48, 90, 116, 123, 124, 125, 126, 127]; and
[-128, -127, -126, -125, -124, -123, -116, -90, -48, -22, 22, 48, 90, 116, 123, 124, 125, 126, 127], where
[-116, -90, -45, -22, 22, 48, 90, 116] are the same as index values of second pilot subcarriers, and [-128, -127, -126, -125, -124, -123, 123, 124, 125, 126, 127] are the same as index values of second guard subcarriers.

With reference to the first aspect and the second aspect, in a possible implementation, index values of first pilot subcarriers include at least one of the following:

[-245, -238, -212, -170, -144, -104, -78, -36, -10, 10, 36, 78, 104, 144, 170, 212, 238, 245];
[-246, -245, -238, -212, -170, -144, -104, -78, -36, -10, 10, 36, 78, 104, 144, 170, 212, 238, 245, 246];
[-247, -246, -245, -238, -212, -170, -144, -104, -78, -36, -10, 10, 36, 78, 104, 144, 170, 212, 238, 245, 246, 247];
[-248, -247, -246, -245, -238, -212, -170, -144, -104, -78, -36, -10, 10, 36, 78, 104, 144, 170, 212, 238, 245, 246, 247, 248];
[-249, -248, -247, -246, -245, -238, -212, -170, -144, -104, -78, -36, -10, 10, 36, 78, 104, 144, 170, 212, 238, 245, 246, 247, 248, 249];
[-250, -249, -248, -247, -246, -245, -238, -212, -170, -144, -104, -78, -36, -10, 10, 36, 78, 104, 144, 170, 212, 238, 245, 246, 247, 248, 249, 250];
[-251, -250, -249, -248, -247, -246, -245, -238, -212, -170, -144, -104, -78, -36, -10, 10, 36, 78, 104, 144, 170, 212, 238, 245, 246, 247, 248, 249, 250, 251];
[-252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252];
[-253, -252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252, 253];
[-254, -253, -252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252, 253, 254]; and
[-255, -254, -253, -252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252, 253, 254, 255], where
[-238, -212, -170, -144, -104, -78, -36, -10, 10, 36, 78, 104, 144, 170, 212, 238] are the same as index values of second pilot subcarriers, and [-256, -255, -254, -253, -252, -251, - 250, -249, -248, -247, -246, -245, 245, 246, 247, 248, 249, 250, 251, 252, 253, 254, 255] are the same as index values of second guard subcarriers.

With reference to the first aspect and the second aspect, in a possible implementation, index values of first pilot subcarriers include at least one of the following:

[-501, -468, -400, -334, -266, -226, -158, -92, -24, 24, 92, 158, 226, 266, 334, 400, 468, 501];
[-502, -501, -468, -400, -334, -266, -226, -158, -92, -24, 24, 92, 158, 226, 266, 334, 400, 468, 501, 502];
[-503, -502, -501, -468, -400, -334, -266, -226, -158, -92, -24, 24, 92, 158, 226, 266, 334, 400, 468, 501, 502, 503];
[-504, -503, -502, -501, -468, -400, -334, -266, -226, -158, -92, -24, 24, 92, 158, 226, 266, 334, 400, 468, 501, 502, 503, 504];

4

[-505, -504, -503, -502, -501, -468, -400, -334, -266, -226, -158, -92, -24, 24, 92, 158, 226, 266, 334, 400, 468, 501, 502, 503, 504, 505];

[-506, -505, -504, -503, -502, -501, -468, -400, -334, -266, -226, -158, -92, -24, 24, 92, 158, 226, 266, 334, 400, 468, 501, 502, 503, 504, 505, 506];

[-507, -506, -505, -504, -503, -502, -501, -468, -400, -334, -266, -226, -158, -92, -24, 24, 92, 158, 226, 266, 334, 400, 468, 501, 502, 503, 504, 505, 506, 507];

[-508, -507, -506, -505, -504, -503, -502, -501, -468, -400, -334, -266, -226, -158, -92, -24, 24, 92, 158, 226, 266, 334, 400, 468, 501, 502, 503, 504, 505, 506, 507, 508];

[-509, -508, -507, -506, -505, -504, -503, -502, -501, -468, -400, -334, -266, -226, -158,-92, -24, 24, 92, 158, 226, 266, 334, 400, 468, 501, 502, 503, 504, 505, 506, 507, 508, 509];

[-510, -509, -508, -507, -506, -505, -504, -503, -502, -501, -468, -400, -334, -266, -226, -158, -92, -24, 24, 92, 158, 226, 266, 334, 400, 468, 501, 502, 503, 504, 505, 506, 507, 508, 509, 510]; and

[-511,-510,-509,-508,-507,-506,-505,-504,-503,-502,-501,-468,-400,-334, -266, -226, -158, -92, -24, 24, 92, 158, 226, 266, 334, 400, 468, 501, 502, 503, 504, 505, 506, 507, 508, 509, 510, 511], where

[-468, -400, -334, -266, -226, -158, -92, -24, 24, 92, 158, 226, 266, 334, 400, 468] are the same as index values of second pilot subcarriers, and [-512, -511, -510, -519, -518, -517, -516, -515, -514, -513, -512, -510, -509, -508, -507, -506, -505, -504, -503, -502, -501, 501, 502, 503, 504, 505, 506, 507, 508, 509, 510, 511] are the same as index values of second guard subcarriers.

With reference to the first aspect and the second aspect, in a possible implementation, index values of first pilot subcarriers include at least one of the following:

[-501,-468,-400,-334,-266,-220,-152,-86,-18, 18, 86, 152, 220, 266, 334, 400, 468, 501];

[-502,-501,-468,-400,-334,-266,-220,-152,-86,-18, 18, 86, 152, 220, 266, 334, 400, 468, 501, 502];

[-503, -502, -501, -468, -400, -334, -266, -220, -152, -86, -18, 18, 86, 152, 220, 266, 334, 400, 468, 501, 502, 503];

[-504, -503, -502, -501, -468, -400, -334, -266, -220, -152, -86, -18, 18, 86, 152, 220, 266, 334, 400, 468, 501, 502, 503, 504];

[-505, -504, -503, -502, -501, -468, -400, -334, -266, -220, -152, -86, -18, 18, 86, 152, 220, 266, 334, 400, 468, 501, 502, 503, 504, 505];

[-506, -505, -504, -503, -502, -501, -468, -400, -334, -266, -220, -152, -86, -18, 18, 86, 152, 220, 266, 334, 400, 468, 501, 502, 503, 504, 505, 506];

[-507, -506, -505, -504, -503, -502, -501, -468, -400, -334, -266, -220, -152, -86, -18, 18, 86, 152, 220, 266, 334, 400, 468, 501, 502, 503, 504, 505, 506, 507];

[-508, -507, -506, -505, -504, -503, -502, -501, -468, -400, -334, -266, -220, -152, -86, -18, 18, 86, 152, 220, 266, 334, 400, 468, 501, 502, 503, 504, 505, 506, 507, 508];

[-509, -508, -507, -506, -505, -504, -503, -502, -501, -468, -400, -334, -266, -220, -152, -86, -18, 18, 86, 152, 220, 266, 334, 400, 468, 501, 502, 503, 504, 505, 506, 507, 508, 509];

[-510,-509,-508,-507,-506,-505,-504,-503,-502,-501,-468,-400,-334,-266, -220,-152,-86,-18, 18, 86, 152, 220, 266, 334, 400, 468, 501, 502, 503, 504, 505, 506, 507, 508, 509, 510]; and

[-511, -510, -509, -508, -507, -506, -505, -504, -503, -502, -501, -468, -400, -334, -266, -220, -152, -86, -18, 18, 86, 152, 220, 266, 334, 400, 468, 501, 502, 503, 504, 505, 506, 507, 508, 509, 510, 511], where

[-468, -400, -334, -266, -220, -152, -86, -18, 18, 86, 152, 220, 266, 334, 400, 468] are the same as index values of second pilot subcarriers, and [-512, -511, -510, -519, -518, -517, -516, -515, -514, -513, -512, -510, -509, -508, -507, -506, -505, -504, -503, -502, -501, 501, 502, 503, 504, 505, 506, 507, 508, 509, 510, 511] are the same as index values of second guard subcarrier.

With reference to the first aspect and the second aspect, in a possible implementation, the first pilot subcarrier is obtained by mapping a second data subcarrier in the first low frequency channel to the first high frequency channel; or the first pilot subcarrier is obtained by mapping a second pilot subcarrier and a second data subcarrier to the first high frequency channel.

In this embodiment of this application, the first pilot subcarrier is obtained by using the second data subcarrier and the second pilot subcarrier (or zero second pilot subcarriers), so that the first pilot subcarrier can be farther away from a filter, and security is higher.

With reference to the first aspect and the second aspect, in a possible implementation, index values of first pilot subcarriers include at least one of the following:

[-25, -15, -5, 5, 15];

[-25, -15, -5, 5, 15, 25];

[-28, -20, -12, -4, 4, 12, 20];
[-28, -20, -12, -4, 4, 12, 20, 28];
[-27, -21, -15, -9, -3, 3, 9, 15, 21];
[-27, -21, -15, -9, -3, 3, 9, 15, 21, 27]; and
[-28, -23, -18, -13, -8, -3, 3, 8, 13, 18, 23]; or
index values of first pilot subcarriers include at least one of the following:

[-49, -35, -21, -7, 7, 21, 35];
[-49, -35, -21, -7, 7, 21, 35, 49];
[-54, -42, -30, -18, -6, 6 18, 30, 42];
[-54, -42, -30, -18, -6, 6 18, 30, 42, 54];
[-55, -45, -35, -25, -15, -5, 5, 15, 25, 35, 45];
[-55, -45, -35, -25, -15, -5, 5, 15, 25, 35, 45, 55];
[-52, -44, -36, -28, -20, -12, -4, 4, 12, 20, 28, 36, 44];
[-52, -44, -36, -28, -20, -12, -4, 4, 12, 20, 28, 36, 44, 52];
[-53, -46, -39, -32, -25, -18, -11, -4, 4, 11, 18, 25, 32, 39, 46];
[-53, -46, -39, -32, -25, -18, -11, -4, 4, 11, 18, 25, 32, 39, 46, 53]; and
[-58, -52, -46, -40, -34, -28, -22, -16, -10, -4, 4, 10, 16, 22, 28, 34, 40, 46, 52]; or

index values of first pilot subcarriers include at least one of the following:

[-108, -84, -60, -36, -12, 12, 36, 60, 84];
[-108, -84, -60, -36, -12, 12, 36, 60, 84, 108];
[-110, -90, -70, -50, -30, -10, 10, 30, 50, 70, 90];
[-110, -90, -70, -50, -30, -10, 10, 30, 50, 70, 90, 110];
[-117, -99, -81, -63, -45, -27, -9, 9, 27, 45, 63, 81, 99];
[-117, -99, -81, -63, -45, -27, -9, 9, 27, 45, 63, 81, 99, 117];
[-113, -98, -83, -68, -53, -38, -23, -8, 8, 23, 38, 53, 68, 83, 98];
[-113, -98, -83, -68, -53, -38, -23, -8, 8, 23, 38, 53, 68, 83, 98, 113];
[-113, -98, -85, -72, -59, -46, -33, -20, -7, 7, 20, 33, 46, 59, 72, 85, 98];
[-113, -98, -85, -72, -59, -46, -33, -20, -7, 7, 20, 33, 46, 59, 72, 85, 98, 113]; and
[-114, -102, -90, -78, -66, -54, -42, -30, -18, -6, 6, 18, 30, 42, 54, 66, 78, 90, 102]; or

index values of first pilot subcarriers include at least one of the following:

[-108, -84, -60, -36, -12, 12, 36, 60, 84];
[-108, -84, -60, -36, -12, 12, 36, 60, 84, 108];
[-110, -90, -70, -50, -30, -10, 10, 30, 50, 70, 90];
[-110, -90, -70, -50, -30, -10, 10, 30, 50, 70, 90, 110];
[-117, -99, -81, -63, -45, -27, -9, 9, 27, 45, 63, 81, 99];
[-117, -99, -81, -63, -45, -27, -9, 9, 27, 45, 63, 81, 99, 117];
[-113, -98, -83, -68, -53, -38, -23, -8, 8, 23, 38, 53, 68, 83, 98];
[-113, -98, -83, -68, -53, -38, -23, -8, 8, 23, 38, 53, 68, 83, 98, 113];
[-113, -98, -85, -72, -59, -46, -33, -20, -7, 7, 20, 33, 46, 59, 72, 85, 98];
[-113, -98, -85, -72, -59, -46, -33, -20, -7, 7, 20, 33, 46, 59, 72, 85, 98, 113]; and
[-114, -102, -90, -78, -66, -54, -42, -30, -18, -6, 6, 18, 30, 42, 54, 66, 78, 90, 102]; or

index values of first pilot subcarriers include at least one of the following:

[-229, -202, -175, -148, -121, -94, -67, -40, -13, 13, 40, 67, 94, 121, 148, 175, 202, 229];
[-228, -204, -180, -156, -132, -108, -84, -60, -36, -12, 12, 36, 60, 84, 108, 132, 156, 180, 204, 228];
[-231, -209, -187, -165, -143, -121, -99, -77, -55, -33, -11, 11, 33, 55, 77, 99, 121, 143, 165, 187, 209, 231];
[-230, -210, -190, -170, -150, -130, -110, -90, -70, -50, -30, -10, 10, 30, 50, 70, 90, 110, 130, 150, 170, 190, 210, 230];
[-225, -207, -189, -171, -153, -135, -117, -99, -81, -63, -45, -27, -9, 9, 27, 45, 63, 81, 99, 117, 135, 153, 171, 189, 207, 225];
[-230, -213, -196, -179, -162, -145, -128, -111, -94, -77, -60, -43, -26, -9, 9, 26, 43, 60, 77, 94, 111, 128, 145, 162, 179, 196, 213, 230];

[-232, -216, -200, -184, -168, -152, -136, -120, -104, -88, -72, -56, -40, -24, -8, 8, 24, 40, 56, 72, 88, 104, 120, 136, 152, 168, 184, 200, 216, 232];

[-233, -218, -203, -188, -173, -158, -143, -128, -113, -98, -83, -68, -53, -38, -23, -8, 8, 23, 38, 53, 68, 83, 98, 113, 128, 143, 158, 173, 188, 203, 218, 233];

[-231, -217, -203, -189, -175, -161, -147, -133, -119, -105, -91, -77, -63, -49, - 35, -21, -7, 7, 21, 35, 49, 63, 77, 91, 105, 119, 133, 147, 161, 175, 189, 203, 217, 231];

[-228, -215, -202, -189, -176, -163, -150, -137, -124, -111, -98, -85, -72, -59, - 46, -33, -20, -7, 7, 20, 33, 46, 59, 72, 85, 98, 111, 124, 137, 150, 163, 176, 189, 202, 215, 228]; and

[-222, -210, -198, -186, -174, -162, -150, -138, -126, -114, -102, -90, -78, -66, - 54, -42, -30, -18, -6, 6, 18, 30, 42, 54, 66, 78, 90, 102, 114, 126, 138, 150, 162, 174, 186, 198, 210, 222]; or

index values of first pilot subcarriers include at least one of the following:

[-476, -420, -364, -308, -252, -196, -140, -84, -28, 28, 84, 140, 196, 252, 308, 364, 420, 476];

[-475, -425, -375, -325, -275, -225, -175, -125, -75, -25, 25, 75, 125, 175, 225, 275, 325, 375, 425, 475];

[-462, -418, -374, -330, -286, -242, -198, -154, -110, -66, -22, 22, 66, 110, 154, 198, 242, 286, 330, 374, 418, 462];

[-483, -441, -399, -357, -315, -273, -231, -189, -147, -105, -63, -21, 21, 63, 105, 147, 189, 231, 273, 315, 357, 399, 441, 483];

[-475, -437, -399, -361, -323, -285, -247, -209, -171, -133, -95, -57, -19, 19, 57, 95, 133, 171, 209, 247, 285, 323, 361, 399, 437, 475];

[-486, -450, -414, -378, -342, -306, -270, -234, -198, -162, -126, -90, -54, -18, 18, 54, 90, 126, 162, 198, 234, 270, 306, 342, 378, 414, 450, 486];

[-478, -445, -412, -379, -346, -313, -280, -247, -214, -181, -148, -115, -82, -49, -16, 16, 49, 82, 115, 148, 181, 214, 247, 280, 313, 346, 379, 412, 445, 478];

[-480, -449, -418, -387, -356, -325, -294, -263, -232, -201, -170, -139, -108, -77, -46, -15, 15, 46, 77, 108, 139, 170, 201, 232, 263, 294, 325, 356, 387, 418, 449, 480];

[-495, -465, -435, -405, -375, -345, -315, -285, -255, -225, -195, -165, -135, -105, -75, -45, -15, 15, 45, 75, 105, 135, 165, 195, 225, 255, 285, 315, 345, 375, 405, 435, 465, 495];

[-490, -462, -434, -406, -378, -350, -322, -294, -266, -238, -210, -182, -154, -126, -98, -70, -42, -14, 14, 42, 70, 98, 126, 154, 182, 210, 238, 266, 294, 322, 350, 378, 406, 434, 462, 490]; and

[-481, -455, -429, -403, -377, -351, -325, -299, -273, -247, -221, -195, -169, -143, -117, -91, -65, -39, -13, 13, 39, 65, 91, 117, 143, 169, 195, 221, 247, 273, 299, 325, 351, 377, 403, 429, 455, 481]; or

index values of first pilot subcarriers include at least one of the following:

[-476, -420, -364, -308, -252, -196, -140, -84, -28, 28, 84, 140, 196, 252, 308, 364, 420, 476];

[-475, -425, -375, -325, -275, -225, -175, -125, -75, -25, 25, 75, 125, 175, 225, 275, 325, 375, 425, 475];

[-462, -418, -374, -330, -286, -242, -198, -154, -110, -66, -22, 22, 66, 110, 154, 198, 242, 286, 330, 374, 418, 462];

[-483, -441, -399, -357, -315, -273, -231, -189, -147, -105, -63, -21, 21, 63, 105, 147, 189, 231, 273, 315, 357, 399, 441, 483];

[-475, -437, -399, -361, -323, -285, -247, -209, -171, -133, -95, -57, -19, 19, 57, 95, 133, 171, 209, 247, 285, 323, 361, 399, 437, 475];

[-486, -450, -414, -378, -342, -306, -270, -234, -198, -162, -126, -90, -54, -18, 18, 54, 90, 126, 162, 198, 234, 270, 306, 342, 378, 414, 450, 486];

[-478, -445, -412, -379, -346, -313, -280, -247, -214, -181, -148, -115, -82, -49, -16, 16, 49, 82, 115, 148, 181, 214, 247, 280, 313, 346, 379, 412, 445, 478];

[-480, -449, -418, -387, -356, -325, -294, -263, -232, -201, -170, -139, -108, -77, -46, -15, 15, 46, 77, 108, 139, 170, 201, 232, 263, 294, 325, 356, 387, 418, 449, 480];

[-495, -465, -435, -405, -375, -345, -315, -285, -255, -225, -195, -165, -135, -105, -75, -45, -15, 15, 45, 75, 105, 135, 165, 195, 225, 255, 285, 315, 345, 375, 405, 435, 465, 495];

[-490, -462, -434, -406, -378, -350, -322, -294, -266, -238, -210, -182, -154, -126, -98, -70, -42, -14, 14, 42, 70, 98, 126, 154, 182, 210, 238, 266, 294, 322, 350, 378, 406, 434, 462, 490]; and

[-481, -455, -429, -403, -377, -351, -325, -299, -273, -247, -221, -195, -169, -143, -117, -91, -65, -39, -13, 13, 39, 65, 91, 117, 143, 169, 195, 221, 247, 273, 299, 325, 351, 377, 403, 429, 455, 481].

With reference to the first aspect and the second aspect, in a possible implementation, a bandwidth of the first low frequency channel includes at least one of the following: 20 MHz, 40 MHz, and 80 MHz; and a bandwidth of the first high frequency channel includes at least one of the following: 270 MHz, 320 MHz, 540 MHz, 1080 MHz, 2160 MHz, 4320 MHz, and 8640 MHz.

According to a third aspect, an embodiment of this application provides a communication apparatus, configured to perform the method in any one of the first aspect or the possible implementations of the first aspect. The communication apparatus includes a unit for performing the method in any one of the first aspect or the possible implementations of the first aspect.

According to a fourth aspect, an embodiment of this application provides a communication apparatus, configured to perform the method in any one of the second aspect or the possible implementations of the second aspect. The communication apparatus includes a unit for performing the method in any one of the second aspect or the possible implementations of the second aspect.

For example, in the third aspect or the fourth aspect, the communication apparatus may include a transceiver unit and a processing unit. For specific descriptions of the transceiver unit and the processing unit, refer to apparatus embodiments provided below.

For another example, in the third aspect, the communication apparatus may include a generation unit and a sending unit, and in the fourth aspect, the communication apparatus may include a receiving unit and a processing unit. For specific descriptions of the units, refer to apparatus embodiments provided below.

According to a fifth aspect, an embodiment of this application provides a communication apparatus. The communication apparatus includes a processor, configured to perform the method in any one of the first aspect or the possible implementations of the first aspect. Alternatively, the processor is configured to execute a program stored in a memory. When the program is executed, the method in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal. For example, the transceiver may be configured to send a PPDU and the like.

According to a sixth aspect, an embodiment of this application provides a communication apparatus. The communication apparatus includes a processor, configured to perform the method in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal. For example, the transceiver may be configured to receive a PPDU.

According to a seventh aspect, an embodiment of this application provides a communication apparatus. The communication apparatus includes a logic circuit and an interface. The logic circuit is coupled to the interface. The logic circuit is configured to generate a PPDU. The interface is configured to output the PPDU.

Optionally, the communication apparatus further includes a memory, and the memory is configured to store at least one of a first sequence, a second sequence, a third sequence, a fourth sequence, and a fifth sequence.

Optionally, the communication apparatus further includes a memory, and the memory is configured to store at least one of a sequence carried in a first STF or a sequence carried in a first LTF.

According to an eighth aspect, an embodiment of this application provides a communication apparatus. The communication apparatus includes a logic circuit and an interface. The logic circuit is coupled to the interface. The interface is configured to input a PPDU. The logic circuit is configured to process the PPDU.

According to a ninth aspect, an embodiment of this application provides a computer-readable storage medium. The computer-readable storage medium is configured to store a computer program, and when the computer program is run on a computer, the method in any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method in any one of the second aspect or the possible implementations of the second aspect is performed.

According to an eleventh aspect, an embodiment of this application provides a computer program product. The computer program product includes a computer program or computer code (which may also be referred to as instructions), and when the computer program or the computer code is run on a computer, the method in any one of the first aspect or the

**EP 4 521 671 A1**

possible implementations of the first aspect is performed.

According to a twelfth aspect, an embodiment of this application provides a computer program product. The computer program product includes a computer program or computer code (which may also be referred to as instructions), and when the computer program or the computer code is run on a computer, the method in any one of the second aspect or the possible implementations of the second aspect is performed.

According to a thirteenth aspect, an embodiment of this application provides a computer program. When the computer program is run on a computer, the method in any one of the first aspect or the possible implementations of the first aspect is performed.

According to a fourteenth aspect, an embodiment of this application provides a computer program. When the computer program is run on a computer, the method in any one of the second aspect or the possible implementations of the second aspect is performed.

According to a fifteenth aspect, an embodiment of this application provides a wireless communication system. The wireless communication system includes a transmit end and a receive end. The transmit end is configured to perform the method in any one of the first aspect or the possible implementations of the first aspect. The receive end is configured to perform the method in any one of the second aspect or the possible implementations of the second aspect.

## BRIEF DESCRIPTION OF DRAWINGS

FIG. 1 is a diagram of a communication system according to an embodiment of this application;

FIG. 2 is a schematic flowchart of a PPDU-based communication method according to an embodiment of this application;

FIG. 3a is a diagram of a process of generating a PPDU by a transmit end according to an embodiment of this application;

FIG. 3b is a diagram of a process of processing a PPDU by a receive end according to an embodiment of this application;

FIG. 4 is a diagram of an emulation result according to an embodiment of this application;

FIG. 5 is a diagram of a structure of a communication apparatus according to an embodiment of this application;

FIG. 6 is a diagram of a structure of a communication apparatus according to an embodiment of this application; and

FIG. 7 is a diagram of a structure of a communication apparatus according to an embodiment of this application.

## DESCRIPTION OF EMBODIMENTS

To make objectives, technical solutions, and advantages of this application clearer, this application is further described with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown at various locations in the specification may not necessarily mean a same embodiment, and is not an independent or alternative embodiment exclusive from another embodiment. It may be understood explicitly and implicitly by a person skilled in the art that embodiments described in the specification may be combined with another embodiment.

In this application, "at least one piece (item)" means one or more, "a plurality of" means two or more, "at least two pieces (items)" means two, three, or more, and "and/or" is used to describe an association relationship between associated objects, which indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one item (piece) of the following" or a similar expression thereof means any combination of these items. For example, at least one item (piece) of a, b, or c may indicate a, b, c, a and b, a and c, b and c, or a, b, and c.

The technical solutions provided in this application may be applied to a wireless local area network (wireless local area network, WLAN) system, for example, Wi-Fi. The method provided in this application is applicable to IEEE 802.11 series protocols, for example, the 802.11a/b/g protocol, the 802.11n protocol, the 802.11ac protocol, the 802.11ax protocol, the 802.11be protocol, or a next-generation protocol. Examples are not enumerated one by one herein. The technical solutions provided in this application may be further applied to a wireless personal area network (wireless personal area network, WPAN) based on a UWB technology. The method provided in this application is applicable to IEEE 802.15 series protocols, for example, the 802.15.4a protocol, the 802.15.4z protocol, the 802.15.4ab protocol, or a future-generation UWB WPAN protocol. Examples are not enumerated one by one herein. The technical solutions provided in this application may be further applied to other communication systems, for example, an internet of things (internet of things, IoT) system, an internet of vehicles (vehicle to X, V2X) system, and a narrow band internet of things (narrow band internet of things, NB-IoT) system, may be applied to a device in an internet of vehicles, an internet of things node, a sensor, and the like in an internet of things (IoT, internet of things), a smart camera, a smart remote control, and a smart water or electricity meter in a smart home, a sensor in a smart city, and the like, or may be further applied to a long term evolution (long term evolution, LTE) system, a 5th generation (5th-generation, 5G) communication system, a new communication system emerging in future communication development (for example, 6G), and the like.

Although embodiments of this application are mainly described by using a WLAN as an example, and particularly, a network used in IEEE 802.11 series standards is used as an example for description. A person skilled in the art easily understands that various aspects in this application may be extended to another network using various standards or protocols, for example, Bluetooth (Bluetooth), a high-performance radio LAN (high-performance radio LAN, HIPERLAN) (a wireless standard similar to the IEEE 802.11 standard, mainly used in Europe) and a wide area network (WAN) or another network that is known or developed in future. Therefore, regardless of used coverage and a used wireless access protocol, various aspects provided in this application are applicable to any suitable wireless network.

The method provided in this application may be implemented by a communication apparatus in a wireless communication system. For example, the communication apparatus may be an access point (access point, AP) or a station (station, STA).

The access point is an apparatus having a wireless communication function, supports communication or sensing by using a WLAN protocol, has a function of communicating with or sensing another device (for example, a station or another access point) in a WLAN network. Certainly, the access point may further have a function of communicating with or sensing another device. Alternatively, the access point is equivalent to a bridge that connects a wired network and a wireless network. A main function of the access point is to connect various wireless network clients together and then connect the wireless network to the ethernet. In a WLAN system, the access point may be referred to as an access point station (AP STA). The apparatus having the wireless communication function may be an entire device, or may be a chip, a processing system, or the like installed in the entire device. The device in which the chip or the processing system is installed may implement the method and functions in embodiments of this application under control of the chip or the processing system. The AP in embodiments of this application is an apparatus that provides a service to a STA, and may support 802.11 series protocols, a subsequent protocol, or the like. For example, the access point may be an access point for a terminal (for example, a mobile phone) to access a wired (or wireless) network, and is mainly deployed in a home, a building, and a park. A typical coverage radius is tens of meters to 100-odd meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. It is clear that the AP may alternatively be a chip or a processing system in these devices in various forms, to implement the method and functions in embodiments of this application. The access point in this application may be an HE AP or an EHT AP, or may be an access point or the like applicable to a future Wi-Fi standard.

The station is an apparatus having a wireless communication function, supports communication or sensing by using a WLAN protocol, and has a capability of communicating with or sensing another station or the access point in the WLAN network. In the WLAN system, the station may be referred to as a non-access point station (non-access point station, non-AP STA). For example, the STA is any user communication device that allows a user to communicate with or sense an AP and further communicate with the WLAN. The apparatus having the wireless communication function may be an entire device, or may be a chip, a processing system, or the like installed in the entire device. The device in which the chip or the processing system is installed may implement the method and functions in embodiments of this application under control of the chip or the processing system. For example, the station may be a wireless communication chip, a wireless sensor, or a wireless communication terminal, and may also be referred to as a user. For another example, the station may be a mobile phone, a tablet computer, a set-top box, a smart television, a smart wearable device, a vehicle-mounted communication device, or a computer that supports a Wi-Fi communication function.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) supporting WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, AR, VR, or another wearable device), a smart device (for example, a printer, a projector, a loudspeaker, or a stereo) in a smart office, an internet of vehicles device in the internet of vehicles, infrastructure (for example, a vending machine, a self-service navigation station of a supermarket, a self-service cash register device, or a self-service ordering machine) in a daily life scenario, a device in a large sports and music venue, or the like. For example, the access point and the station each may be a device used in an internet of vehicles, an internet of things node, a sensor, or the like in an internet of things, a smart camera, a smart remote control, and a smart water or electricity meter in a smart home, a sensor in a smart city, or the like. Specific forms of the STA and the AP are not limited in embodiments of this application, and are merely examples for description herein.

For example, a communication system to which the method provided in embodiments of this application may be applied may include an access point and a station. For example, this application is applicable to a scenario in which an AP communicates with or senses a STA in the WLAN. Optionally, the AP may communicate with or sense a single STA, or the AP may simultaneously communicate with or sense a plurality of STAs. Specifically, communication or sensing between the AP and the plurality of STAs may further be classified into downlink transmission in which the AP simultaneously sends signals to the plurality of STAs, and uplink transmission in which the plurality of STAs send signals to the AP. A WLAN communication protocol may be supported between the AP and the STA. The communication protocol may include IEEE 802.11 series protocols, for example, is applicable to the 802.11be standard, and certainly is also applicable to a standard later than 802.11be.

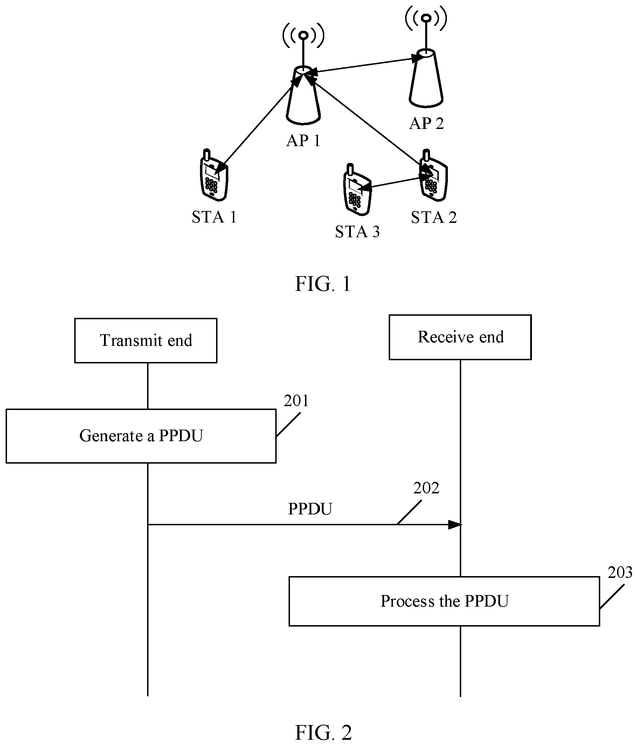

FIG. 1 is a diagram of an architecture of a communication system according to an embodiment of this application. The communication system may include one or more APs and one or more STAs. FIG. 1 shows two access points: an AP 1 and an AP 2, and three stations: a STA 1, a STA 2, and a STA 3. It may be understood that one or more APs may communicate with one or more STAs. Certainly, an AP may communicate with an AP, and a STA may communicate with a STA.

It may be understood that, in FIG. 1, an example in which the STA is a mobile phone and the AP is a router is used, and this does not mean a limitation on types of the AP and the STA in this application. In addition, FIG. 1 shows only two APs and three STAs as an example. However, there may be more or fewer APs or STAs. This is not limited in this application.

For ease of description, the method provided in embodiments of this application is described below by using a transmit end and a receive end as examples. The transmit end may include the AP, and the receive end may include the STA; or the transmit end includes the STA, and the receive end includes the AP; or both the transmit end and the receive end are the APs; or both the transmit end and the receive end are the STAs.

It may be understood that a symbol shown below may be referred to as an OFDM symbol, and descriptions of the OFDM symbol may be shown as follows:

Orthogonal frequency division multiplexing is a multi-carrier transmission technology. The technology may use a large quantity of adjacent orthogonal subcarriers, and each subcarrier may be modulated by using a modulation technology. Therefore, the orthogonal frequency division multiplexing technology can have a high-rate transmission capability and can effectively resist frequency selective fading (frequency selective fading). In a WLAN communication protocol, each OFDM symbol may include a pilot subcarrier (pilot subcarrier), a data subcarrier (data subcarrier), a guard subcarrier, and a direct current subcarrier. The guard subcarrier and the direct current subcarrier may not carry a signal. It may also be considered that signal values carried on the guard subcarrier and the direct current subcarrier are 0. The pilot subcarrier is a subcarrier for carrying a pilot in an OFDM symbol, and the data subcarrier is a subcarrier for placing or carrying data. It may also be considered that the data subcarrier is used to carry payload information. The pilot subcarrier is used to carry a pilot signal, and a value of the pilot signal is usually 1 or -1. In the communication system, the pilot subcarrier may be used to help detect and correct a subcarrier phase offset (or used to estimate a residual frequency offset and phase noise), thereby improving accuracy of parsing the data subcarrier. Based on a function of the pilot subcarrier, a quantity of pilot subcarriers may affect accuracy of correcting a frequency offset or a phase offset by the receive end, and further affect a bit error rate of a received signal or a required received signal-to-noise ratio of the receive end.

It may be understood that the descriptions of the OFDM symbol are applicable to all embodiments shown below.

With development of WLAN protocols (for example, 802.11 series protocols), the WLAN protocols support larger bandwidths (for example, from 20 MHz to 320 MHz) and higher and more frequency bands, and therefore, spectral efficiency and throughput are continuously improved. The 802.11 series protocols may include protocols for a low frequency band and protocols for a high frequency band. For example, the protocols for the low frequency band may include 802.11, 802.11b, 802.11a, 802.11g, 802.11n, 802.11ac, 802.11ax, 802.11be, and the like. Details are not enumerated one by one herein. For example, the protocols for the high frequency band may include 802.11aj, 802.11ay, and the like. Details are not enumerated one by one herein. Different protocols may have different PPDU structures. For details, refer to related standards or protocols. Details are not shown one by one in this application.

In some embodiments, a baseband chip may be separately designed for the high frequency band signal and the low frequency band signal. In some other embodiments, a converged baseband chip may be designed for the high frequency band signal and the low frequency band signal. However, the foregoing two manners have high costs for chip design, development, debugging, and the like. Therefore, in still some other embodiments, a method A is provided as follows: A high frequency band signal obtained by extending a subcarrier spacing of a low frequency band signal is directly sent. To be specific, a quantity of pilot subcarriers used for the high frequency band signal is equal to a quantity of pilot subcarriers used for the low frequency band signal, there is a mapping relationship between a location of a pilot subcarrier used for the high frequency band signal and a location of a pilot subcarrier used for the low frequency band signal, a quantity of guard subcarriers used for the high frequency band signal is equal to a quantity of guard subcarriers used for the low frequency band signal, and there is a mapping relationship between a location of a guard subcarrier used for the high frequency band signal and a location of a guard subcarrier used for the low frequency band signal. Therefore, a manner of sending the high frequency band signal is closer to a manner of sending the low frequency band signal. This reduces complexity of designing a baseband chip compatible with the high frequency and the low frequency.

However, in the foregoing method A, the high frequency band signal obtained by extending the subcarrier spacing of the signal in the protocol for the low frequency band is directly sent. In the method, a quantity of pilots for the high frequency band signal, an index of the pilot subcarrier, and the like are directly consistent with a quantity of pilots, an index (index) of a pilot subcarrier, and the like that are used in the 802.11n/802.11ac/802.11ax/802.11be protocol. However, 802.11n/802.11ac/802.11ax/802.11be is a protocol applicable to a sub-7 GHz frequency band. When a signal obtained by extending a subcarrier spacing in the protocol is directly transmitted on a frequency band greater than or equal to (super) 45 GHz, because a channel environment, interference strength, and the like of the high frequency band signal are different from those of a low frequency band, an original quantity of pilots is no longer optimal, for example, there may be insufficient pilots. It may be understood that the pilot shown in this application may also be understood as a pilot subcarrier. The frequency band greater than 45 GHz or equal to 45 GHz shown above may include a 45 GHz frequency band, a 60 GHz frequency band, or the like.

In view of this, embodiments of this application provide a PPDU-based communication method and apparatus, to effectively ensure a quantity of pilots, so that a receive end can perform processing based on a larger quantity of pilots, thereby improving accuracy of correcting a frequency offset and/or a phase offset by the receive end, and improving demodulation accuracy of the receive end.

Before the method provided in embodiments of this application is described, the following describes principles of embodiments of this application in detail.

When a subcarrier spacing of a low frequency band signal is extended to obtain a high frequency band signal, a subcarrier spacing of the high frequency band signal is extended, and a signal bandwidth of the high frequency band signal is also increased. The low frequency band signal shown herein may be understood as a signal sent on a first low frequency channel, and the high frequency band signal may be understood as a signal sent on a first high frequency channel. The signal bandwidth shown in this application is a sample rate of the signal, and may be determined based on a sampling clock of a baseband. In a protocol for a low frequency band, the signal bandwidth may be equal to a channel bandwidth. However, in a protocol for a high frequency band, a relationship between the signal bandwidth and the channel bandwidth is not limited. For example, the signal bandwidth may be equal to the channel bandwidth. For another example, the signal bandwidth may be less than the channel bandwidth. Certainly, the signal bandwidth may alternatively be greater than the channel bandwidth. The channel bandwidth may be understood as a difference between an upper limit frequency and a lower limit frequency of a signal that is allowed to pass. A bandwidth of the first low frequency channel may include at least one of the following: 20 MHz, 40 MHz, 80 MHz, 160 MHz, and 320 MHz, and a bandwidth of the first high frequency channel may include at least one of the following: 270 MHz, 320 MHz, 540 MHz, 1080 MHz, 2160 MHz, 4320 MHz, and 8640 MHz. The bandwidth of the first low frequency channel and the bandwidth of the first high frequency channel shown herein may be understood as channel bandwidths shown in this application.

Although the subcarrier spacing is extended, a DFT size (size) corresponding to the first high frequency channel is the same as a DFT size of the first low frequency channel. Therefore, a total quantity of subcarriers included in the first high frequency channel is the same as a total quantity of subcarriers included in the first low frequency channel, and there is a mapping relationship between each subcarrier included in the first high frequency channel and each subcarrier included in the first low frequency channel, for example, an index value of the subcarrier in the first high frequency channel is the same as an index value of the subcarrier in the first low frequency channel. The foregoing "an index value of the subcarrier in the first high frequency channel is the same as an index value of the subcarrier in the first low frequency channel" may also be understood as that a relative index value of the subcarrier in the first high frequency channel is the same as a relative index value of the subcarrier in the first low frequency channel (that is, for the first high frequency channel and the first low frequency channel, a same set of index values is used to mark subcarriers). However, a location of a subcarrier that corresponds to a specific index value and that is in the first high frequency channel is different from a location of a subcarrier that corresponds to the specific index value and that is in the first low frequency channel. For example, a subcarrier spacing that corresponds to an index value and that is in the first high frequency channel is greater than a subcarrier spacing that corresponds to the index value and that is in the first low frequency channel. For another example, a frequency of a subcarrier that corresponds to a specific index value and that is in the first high frequency channel is different from a frequency of a subcarrier that corresponds to the specific index value and that is in the first low frequency channel. The relative index value shown above is an index value of a subcarrier A in the first high frequency channel relative to a subcarrier B in the first high frequency channel, or an index value of a subcarrier A in the first low frequency channel relative to a subcarrier B in the first low frequency channel. It may be understood that A and B shown above may be understood as index values of subcarriers, an absolute location of the subcarrier A in the first high frequency channel is different from that of the subcarrier A in the first low frequency channel, and an absolute location of the subcarrier B in the first high frequency channel is different from that of the subcarrier B in the first low frequency channel. The subcarrier A and the subcarrier B shown herein are general expressions, and should not be understood as a limitation on embodiments of this application.

For example, the bandwidth of the first low frequency channel is 20 MHz, and the bandwidth of the first high frequency channel is 270 MHz. If 20 MHz is a channel bandwidth defined in the 802.11ac protocol, a total quantity of subcarriers included in the 20 MHz channel bandwidth is 64, or a DFT size of the channel bandwidth is 64, and a subcarrier spacing of the 20 MHz channel bandwidth is 312.5 kHz. Correspondingly, a total quantity of subcarriers included in the first high frequency channel is 64, and a subcarrier spacing may be 3.75 MHz (which is obtained based on 12 times of the 312.5 kHz subcarrier spacing of the 20 MHz channel bandwidth). It may be understood that a bandwidth obtained based on the subcarrier spacing and the total quantity of subcarriers is 3.75 MHz*64=240 MHz, and 240 MHz may be understood as a signal bandwidth of a PPDU sent on the first high frequency channel.

For another example, the bandwidth of the first low frequency channel is 20 MHz, and the bandwidth of the first high frequency channel is 540 MHz. If 20 MHz is a channel bandwidth defined in the 802.11ac protocol, a total quantity of subcarriers included in the 20 MHz channel bandwidth is 64, or a DFT size of the channel bandwidth is 64, and a subcarrier spacing of the 20 MHz channel bandwidth is 312.5 kHz. Correspondingly, a total quantity of subcarriers included in the first high frequency channel is 64, or the DFT size is 64, and the subcarrier spacing is 7.8125 MHz (which is obtained based on 25 times of the 312.5 kHz subcarrier spacing of the 20 MHz channel bandwidth). It may be understood that a bandwidth obtained based on the subcarrier spacing and the total quantity of subcarriers is 7.8125 MHz*64=500 MHz, and 500 MHz may be understood as a signal bandwidth of a PPDU sent on the first high frequency channel.

For another example, the bandwidth of the first low frequency channel is 40 MHz, the bandwidth of the first high frequency channel is 540 MHz, and a DFT size is 128. In this case, a subcarrier spacing corresponding to the first high frequency channel is 3.75 MHz. For another example, the bandwidth of the first low frequency channel is 20 MHz, the bandwidth of the first high frequency channel is 1080 MHz, and a DFT size is 256. In this case, a subcarrier spacing corresponding to the first high frequency channel is 3.5156 MHz. For another example, the bandwidth of the first low frequency channel is 40 MHz, the bandwidth of the first high frequency channel is 1080 MHz, and a DFT size is 128. In this case, a subcarrier spacing corresponding to the first high frequency channel is 7.8125 MHz. For another example, the bandwidth of the first low frequency channel is 80 MHz, the bandwidth of the first high frequency channel is 1080 MHz, and a DFT size is 256. In this case, a subcarrier spacing corresponding to the first high frequency channel is 3.5156 MHz. For another example, the bandwidth of the first low frequency channel is 20 MHz, the bandwidth of the first high frequency channel is 2160 MHz, and a DFT size is 256. In this case, a subcarrier spacing corresponding to the first high frequency channel is 7.03125 MHz. For another example, the bandwidth of the first low frequency channel is 40 MHz, the bandwidth of the first high frequency channel is 2160 MHz, and a DFT size is 512. In this case, a subcarrier spacing corresponding to the first high frequency channel is 3.5156 MHz. For another example, the bandwidth of the first low frequency channel is 80 MHz, the bandwidth of the first high frequency channel is 2160 MHz, and a DFT size is 256. In this case, a subcarrier spacing corresponding to the first high frequency channel is 7.03125 MHz. For another example, the bandwidth of the first low frequency channel is 160 MHz, the bandwidth of the first high frequency channel is 2160 MHz, and a DFT size is 512. In this case, a subcarrier spacing corresponding to the first high frequency channel is 3.5156 MHz. For another example, the bandwidth of the first low frequency channel is 40 MHz, the bandwidth of the first high frequency channel is 4320 MHz, and a DFT size is 512. In this case, a subcarrier spacing corresponding to the first high frequency channel is 7.93 MHz. For another example, the bandwidth of the first low frequency channel is 80 MHz, the bandwidth of the first high frequency channel is 4320 MHz, and a DFT size is 1024. In this case, a subcarrier spacing corresponding to the first high frequency channel is 3.91 MHz. For another example, the bandwidth of the first low frequency channel is 160 MHz, the bandwidth of the first high frequency channel is 4320 MHz, and a DFT size is 512. In this case, a subcarrier spacing corresponding to the first high frequency channel is 7.8125 MHz. For another example, the bandwidth of the first low frequency channel is 80 MHz, the bandwidth of the first high frequency channel is 8640 MHz, and a DFT size is 1024. In this case, a subcarrier spacing corresponding to the first high frequency channel is 8.2 MHz. For another example, the bandwidth of the first low frequency channel is 160 MHz, the bandwidth of the first high frequency channel is 8640 MHz, and a DFT size is 2048. In this case, a subcarrier spacing corresponding to the first high frequency channel is 4.05 MHz.

It may be understood that the subcarrier spacings shown above are merely examples, and should not be understood as a limitation on embodiments of this application.

For descriptions of the first low frequency channel and the first high frequency channel, further refer to the following descriptions.

FIG. 2 is a schematic flowchart of a PPDU-based communication method according to an embodiment of this application. As shown in FIG. 2, the method includes the following steps.

201: A transmit end generates a PPDU.

The transmit end may generate the PPDU based on the subcarrier in the first high frequency channel. For example, the transmit end may generate an OFDM symbol based on a first pilot subcarrier and/or a first data subcarrier, and generate the PPDU based on the OFDM symbol.

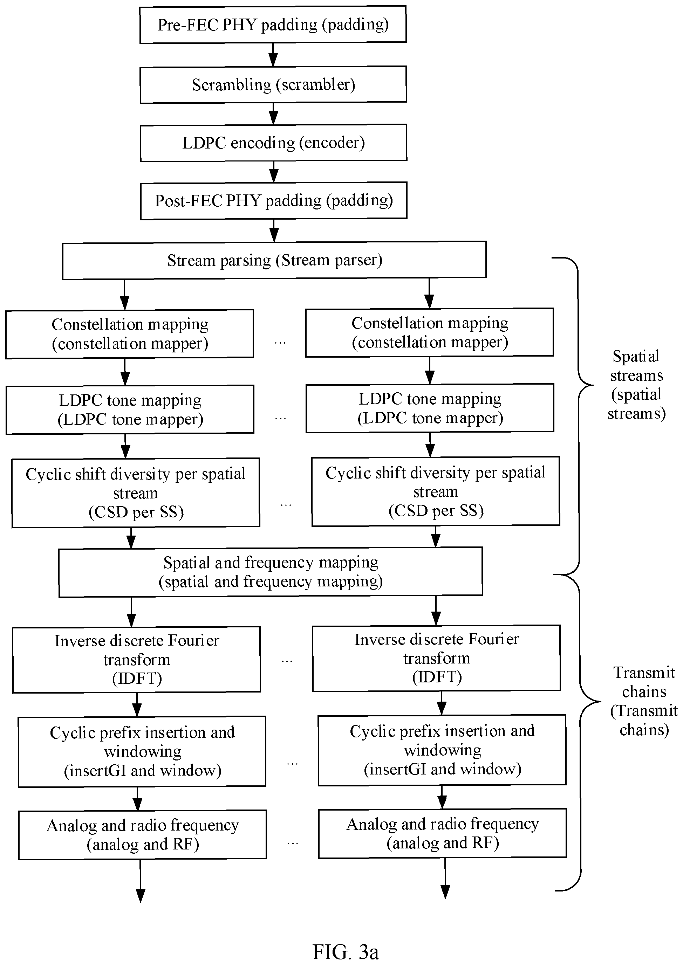

For example, in frequency domain, the transmit end may perform channel encoding and digital modulation (for example, by using a quadrature amplitude modulation (quadrature amplitude modulation, QAM) technology), and frequency domain mapping on information bits to generate the OFDM symbol, and perform serial-to-parallel conversion, inverse discrete Fourier transform (inverse discrete Fourier transform, IDFT), cyclic prefix insertion and windowing, and parallel-to-serial conversion to obtain a digital signal. Then, the digital signal is converted into an analog signal via a digital-to-analog converter. When the transmit end performs OFDM modulation, an object modulated by the transmit end may be content obtained by performing another operation on an information bit stream obtained by the transmit end, for example, a quadrature amplitude modulation (quadrature amplitude modulation, QAM) symbol or a binary phase shift keying (binary phase shift keying, BPSK) modulation symbol. Details are not enumerated one by one herein. The information bit stream shown herein may be understood as being obtained based on at least one of a sequence carried in a short training field (legacy short training field, L-STF), a sequence carried in a long training field (legacy long training field, L-LTF), signaling information, or data source information. In an example, for the process of generating the PPDU by the transmit end, refer to a method shown in FIG. 3a below.

202: The transmit end sends the PPDU on the first high frequency channel. Correspondingly, a receive end receives the PPDU on the first high frequency channel.

The first high frequency channel includes the first pilot subcarrier and the first data subcarrier, the discrete Fourier transform (discrete Fourier transform, DFT) size (size) corresponding to the first high frequency channel is the same as the DFT size corresponding to the first low frequency channel, a quantity of first pilot subcarriers is greater than a quantity of second pilot subcarriers in the first low frequency channel, and a quantity of first data subcarriers is equal to a quantity of second data subcarriers in the first low frequency channel.

The DFT size may also be referred to as a DFT value, and the DFT size may be a quantity of points of discrete Fourier transform. The foregoing "the DFT size corresponding to the first high frequency channel is the same as the DFT size corresponding to the first low frequency channel" may also be understood as at least one of the following: The total quantity of subcarriers included in the first high frequency channel is the same as the total quantity of subcarriers included in the first low frequency channel; the index value of the subcarrier in the first high frequency channel is the same as the index value of the subcarrier in the first low frequency channel; and a sample rate of a signal carried in the first high frequency channel is an integer multiple of a minimum sample rate of a signal carried in the first low frequency channel, where the minimum sample rate is 20 MHz. The sampling clock can be reused based on the foregoing relationship between the sample rates. The sample rate may also be referred to as a baseband clock frequency, a baseband sampling clock frequency, or the like. It may be understood that, for the transmit end, the DFT size may be a size used when the transmit end performs IDFT, and for the receive end, the DFT size is a size used when the receive end performs DFT.

In this embodiment of this application, there may be a mapping relationship between the first pilot subcarrier and at least one of the following subcarriers. In other words, the first pilot subcarrier in the first high frequency channel may be obtained by mapping the following subcarriers in the first low frequency channel to the first high frequency channel: one or more second pilot subcarriers, one or more second guard subcarriers, and one or more second data subcarriers. Details are described as follows.

In a possible implementation, there is a mapping relationship between the first pilot subcarrier and the second pilot subcarrier and the second guard subcarrier that are in the first low frequency channel. The first pilot subcarrier in the first high frequency channel may be obtained by mapping the second pilot subcarrier and the second guard subcarrier that are in the first low frequency channel to the first high frequency channel. For example, an index value of the first pilot subcarrier includes at least one of the following: an index value of the second guard subcarrier and an index value of the second pilot subcarrier. For the first pilot subcarrier obtained in this implementation, a change is smaller than that in a protocol for a low frequency band.

In another possible implementation, there is a mapping relationship between the first pilot subcarrier and the second data subcarrier that is in the first low frequency channel. For example, an index value of the first pilot subcarrier includes index values of the one or more second data subcarriers. The first pilot subcarrier obtained in this implementation is far away from a filter, and is more secure.

In still another possible implementation, there is a mapping relationship between the first pilot subcarrier and the second data subcarrier and the second pilot subcarrier that are in the first low frequency channel. For example, an index value of the first pilot subcarrier includes an index value of the second data subcarrier and an index value of the second pilot subcarrier. The first pilot subcarrier obtained in this implementation is far away from a filter, and is more secure.

A location of each first pilot subcarrier, a frequency of each first pilot subcarrier, or the like may be obtained based on the index value of the first pilot subcarrier and the subcarrier spacing in the first high frequency channel that are shown above.

It may be understood that the foregoing three implementations may be independent implementations, or may be combined with each other. This is not limited in embodiments of this application. For descriptions of the first pilot subcarrier, the first data subcarrier, the first guard subcarrier, the second pilot subcarrier, the second data subcarrier, and the second guard subcarrier, refer to the following descriptions, as shown in Table 1 to Table 14.

203: The receive end processes the PPDU.

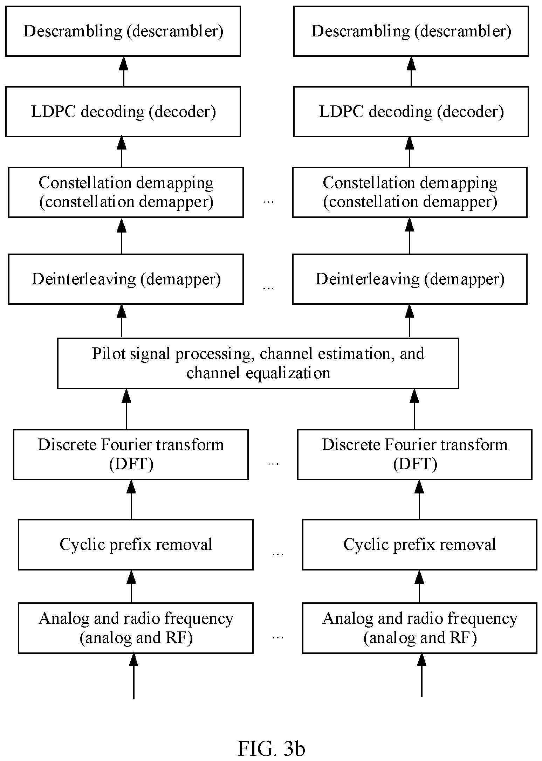

The process of generating the PPDU by the transmit end may be understood as that the transmit end processes information about a signal source, to change the information into a signal suitable for transmission. Correspondingly, a process of processing the PPDU by the receive end may be understood as extracting the information about the signal source from the received signal. Therefore, for the process of processing the PPDU by the receive end, adaptively refer to the process of generating the PPDU by the transmit end. In a possible implementation, the step of processing the PPDU by the receive end may include: The receive end obtains, based on the index value of the first pilot subcarrier, a pilot signal in the PPDU on the first pilot subcarrier corresponding to the index value; and then performs processing based on the pilot signal. For example, the receive end may perform phase offset estimation and/or compensation based on the pilot signal. For another example, the receive end may perform frequency offset estimation and/or compensation based on the pilot signal. Therefore, the receive end can correct a phase offset of a data subcarrier, thereby improving demodulation accuracy. In an example, for the process of processing the PPDU by the receive end, refer to a method shown in FIG. 3b below.

Certainly, the receive end may further perform channel estimation, channel equalization, synchronization, and the like based on the PPDU. Details are not described herein one by one.

It should be understood that this embodiment of this application mainly relates to index values of pilot subcarriers, data subcarriers, and the like that are used when the PPDU is generated. For a frame structure of the PPDU, refer to a related standard or protocol. Details are not enumerated in embodiments of this application.

It should be noted that the first high frequency channel and the subcarrier included in the first high frequency channel are described above by describing a mapping relationship between the first high frequency channel and the first low frequency channel. However, it may be understood that, in an implementation, the mapping relationship between the first high frequency channel and the first low frequency channel is described in a protocol. In another implementation, the first pilot subcarrier and the first data subcarrier that are in the first high frequency channel may be set or specified in a protocol. Therefore, the foregoing method may be replaced with that the transmit end generates the PPDU and sends the PPDU on the first high frequency channel, and correspondingly, the receive end receives the PPDU and processes the PPDU. The bandwidth of the first high frequency channel is any one of the following: 270 MHz, 320 MHz, 540 MHz, 1080 MHz, 2160 MHz, 4320 MHz, and 8640 MHz. The first high frequency channel includes the first pilot subcarrier, and the quantity of first pilot subcarriers is at least one of the following: 5, 6, 7, 8, 9, 10, 11, 12, 13, 14, 15, 16, 17, 18, 20, 22, 24, 26, 28, 30, 32, 34, 36, and 38. Total subcarriers in the first high frequency channel include a data subcarrier, a pilot subcarrier, a direct current subcarrier, a guard subcarrier, and the like. The total quantity of subcarriers is any one of the following: 64, 128, 256, 512, 1024, and 2048. It may be understood that, for index values and/or locations of all first pilot subcarriers, refer to the foregoing descriptions. Details are not described herein again. For the index value of the first pilot subcarrier and an index value of the first guard subcarrier, refer to Table 1 to Table 14 below.

In this embodiment of this application, it is ensured that the quantity of first pilot subcarriers is greater than the quantity of second pilot subcarriers, so that the receive end has a sufficient quantity of pilots to correct a frequency offset, thereby improving accuracy of demodulating data by the receive end. In a solution of directly extending a subcarrier spacing of a low frequency band signal to obtain a high frequency band signal and keeping a quantity of pilots unchanged, because interference of the high frequency band signal is greater than interference of the low frequency band signal, if the quantity of pilots does not change, the receive end may not have a sufficient quantity of pilots to correct a frequency offset. As a result, phase offset estimation of the receive end may be inaccurate, and a phase offset associated with a data subcarrier cannot be accurately compensated. This affects signal demodulation accuracy. Further, according to the method provided in this embodiment of this application, a principle of processing the high frequency band signal may be similar to that of processing the low frequency band signal. This implements compatibility of a baseband chip. According to the method provided in this embodiment of this application, a change to a low-frequency baseband chip can be reduced. This helps reuse a baseband for the high frequency signal and the low frequency signal.

The following describes in detail the process of generating the PPDU by the transmit end and the process of processing the PPDU by the receive end.

FIG. 3a is a diagram of the process of generating the PPDU by the transmit end according to this embodiment of this application. As shown in FIG. 3a, the process of generating the PPDU by the transmit end may be shown as follows: Scrambling (or a scrambler shown in FIG. 3a), LDPC encoding (or an encoder shown in FIG. 3a), stream parsing (or a stream parser shown in FIG. 3a), constellation mapping (or a constellation mapper shown in FIG. 3a), LDPC tone mapping (or an LDPC tone mapper shown in FIG. 3a), cyclic shift diversity per spatial stream (CSD per SS), spatial and frequency mapping, and other processing may be performed on the information bits, to form a frequency domain signal, a time domain signal is formed through IDFT, then an OFDM symbol is formed through cyclic prefix insertion and windowing (insertGI and window), and then the OFDM symbol is sent through analog and radio frequency (analog and RF) circuits. A plurality of OFDM symbols form the PPDU. Optionally, before forward error correction (forward error correction, FEC) (pre-FEC shown in FIG. 3a) coding, the transmit end may further perform PHY padding (padding). Optionally, after FEC (post-FEC shown in FIG. 3a), the transmit end may further perform PHY padding.

FIG. 3b is a diagram of the process of processing the PPDU by the receive end according to this embodiment of this application. As shown in FIG. 3b, the process of processing the PPDU by the receive end may be shown as follows: For each OFDM symbol in the PPDU, a signal may be first received through the analog and radio frequency circuits. After the signal is converted into a digital baseband signal, a cyclic prefix is removed, then a frequency domain signal is obtained through DFT, then a pilot signal is processed to correct a phase offset and/or a frequency offset, channel impact is eliminated through channel estimation and equalization, and finally the source information bits are restored through deinterleaving (or a demapper shown in FIG. 3b), constellation point demapping (which may also be referred to as constellation demapping or a constellation demapper shown in FIG. 3b), channel decoding (LDPC decoding or a decoder shown in FIG. 3b), descrambling (or a descrambler shown in FIG. 3b), and other operations.

It should be understood that the processes shown in FIG. 3a and FIG. 3b are merely examples. There may be more or fewer steps in the step of generating the PPDU by the transmit end, and there may be more or fewer steps in the step of processing the PPDU by the receive end. This is not limited in embodiments of this application.

The following describes the pilot subcarrier provided in this embodiment of this application with reference to specific examples. It should be understood that the first pilot subcarriers shown in Table 1 to Table 14 below are merely examples. During specific implementation, there may be more first pilot subcarriers or index values of the first pilot subcarriers are different. This is not limited in embodiments of this application.

Example 1

In the 802.11ac protocol, a tone plan (tone plan) in a 20 MHz bandwidth may be shown as follows: 64 subcarriers are included, and index values of the subcarriers are sequentially defined as -32:31. A subcarrier whose index value is 0 is a direct current subcarrier, and a carried value is 0; subcarriers whose index values are -32:-29 and 29:31 are guard subcarriers, that is, [-32, -31, -30, -29, 29, 30, 31], and carried values are 0; subcarriers whose index values are [-21, -7, 7, 21] are pilot subcarriers, and carried values are +1 or -1; and the rest is a data subcarrier and carries a modulation symbol. It may be understood that, in 802.11ac, the pilot subcarrier shown herein is the second pilot subcarrier shown in this embodiment of this application, the guard subcarrier shown herein is a guard subcarrier corresponding to the second pilot subcarrier, and the data subcarrier shown herein is a data subcarrier corresponding to the second pilot subcarrier.

Optionally, a subcarrier that is in a high frequency channel and that has a mapping relationship with a guard subcarrier in a low frequency channel may be used as a pilot subcarrier. In other words, the subcarrier that is in the high frequency channel and whose index value is the same as that of the guard subcarrier in the low frequency channel is used as the pilot subcarrier; or index values of some pilot subcarriers in the high frequency channel are the same as index values of guard subcarriers in the low frequency channel. Optionally, a subcarrier that is in a high frequency channel and that has a mapping relationship with a pilot subcarrier in a low frequency channel may be used as a pilot subcarrier. In other words, the subcarrier that is in the high frequency channel and whose index value is the same as that of the pilot subcarrier in the low frequency channel is used as the pilot subcarrier; or index values of some pilot subcarriers in the high frequency channel are the same as index values of pilot subcarriers in the low frequency channel. For example, the index value of the first pilot subcarrier may meet at least one of the following: Index values of first pilot subcarriers are the same as index values of the foregoing 1 to 7 second guard subcarriers, and index values of first pilot subcarriers are the same as index values of the foregoing 1 to 4 second pilot subcarriers. As shown in Table 1, a location of the first pilot subcarrier may be determined based on a subcarrier spacing of the first high frequency channel and the index value of the first pilot subcarrier, or may be determined based on a subcarrier spacing of the first high frequency channel, a subcarrier spacing of the first low frequency channel, a location of the second pilot subcarrier in the 20 MHz bandwidth in 802.11ac, and a location of the second guard subcarrier selected as a supplementary first pilot subcarrier. Optionally, a subcarrier that is in a high frequency channel and that has a mapping relationship with a data subcarrier in a low frequency channel may be used as a pilot subcarrier. In other words, the subcarrier that is in the high frequency channel and whose index value is the same as that of the data subcarrier in the low frequency channel is used as the pilot subcarrier; or index values of some pilot subcarriers in the high frequency channel are the same as index values of data subcarriers in the low frequency channel. For example, the index value of the first pilot subcarrier may meet at least one of the following: Index values of first pilot subcarriers are the same as index values of one or more second data subcarriers, and index values of first pilot subcarriers are the same as index values of the 1 to 4 second pilot subcarriers. The first pilot subcarriers shown in Table 2 may be understood as reconfigured pilot subcarriers. It may be understood that, in this embodiment of this application, the relationship between the pilot subcarrier in the high frequency channel and the data subcarrier in the low frequency channel, the relationship between the pilot subcarrier in the high frequency channel and the pilot subcarrier in the low frequency channel, and the relationship between the pilot subcarrier in the high frequency channel and the guard subcarrier in the low frequency channel are also applicable to another embodiment shown in this application, for example, examples 2 to 7 shown below.

For example, Table 1 and Table 2 show the index values of the first pilot subcarriers and the index values of the first guard subcarriers that are provided in this embodiment of this application. For Table 1 and Table 2, [-21, -7, 7, 21] are the same as the index values of the second pilot subcarriers, and [-32, -31, -30, -29, 29, 30, 31] are the same as the index values of the second guard subcarriers. For example, in the second row in Table 1, the subcarrier corresponding to -29 in the index values of the first pilot subcarriers may be understood as having a mapping relationship with the guard subcarrier in the 20 MHz bandwidth in 802.11ac. In other words, the subcarrier that is in the high frequency channel and whose index value is the same as that of the guard subcarrier in the low frequency channel is used as the pilot subcarrier. For another example, in the second row in Table 2, the subcarriers corresponding to the index values [-25, -15, -5, 5, 15] of the first pilot subcarriers may be understood as having mapping relationships with the data subcarriers in the 20 MHz bandwidth in 802.11ac (namely, five second data subcarriers) respectively. In other words, the subcarrier that is in the high frequency channel and whose index value is the same as that of the data subcarrier in the low frequency channel is used as the pilot subcarrier. For Table 1 and Table 2, the quantity of first pilot subcarriers is greater than the quantity of second pilot subcarriers, the quantity of first data subcarriers is equal to the quantity of second data subcarriers, and the quantity of first guard subcarriers is less than the quantity of second guard subcarriers.

**Table 1**

| Quantity of added pilot subcarriers | Index values of the first pilot subcarriers | Index values of the first guard subcarriers |
|---|---|---|
| 1 | [-29, -21, -7, 7, 21] | [-32:-30, 29:31] |
| 2 | [-29, -21, -7, 7, 21, 29] | [-32:-30, 30:31] |
| 3 | [-30, -29, -21, -7, 7, 21, 29] | [-32:-31, 30:31] |
| 4 | [-30, -29, -21, -7, 7, 21, 29, 30] | [-32:-31, 31] |
| 5 | [-31, -30, -29, -21, -7, 7, 21, 29, 30] | [-32, 31] |
| 6 | [-31, -30, -29, -21, -7, 7, 21, 29, 30, 31] | [-32] |
| 7 | [-32, -31, -30, -29, -21, -7, 7, 21, 29, 30, 31] | [] (that is, no guard subcarrier) |

A change to the first pilot subcarrier and the first guard subcarrier that are shown in Table 1 is smaller than that to the second pilot subcarrier and the second guard subcarrier.

It may be understood that all remaining index values other than the index values of the first pilot subcarriers shown in Table 1, the index values of the first guard subcarriers shown in Table 1, and the index value of the direct current subcarrier (the index value is 0) in the index values -32:31 are index values of the first data subcarriers.

**Table 2**

| Quantity of added pilot subcarriers | Index values of the first pilot subcarriers | Index values of the first guard subcarriers |
|---|---|---|
| 1 | [-25, -15, -5, 5, 15] | [-32:-30, 29:31] |
| 2 | [-25, -15, -5, 5, 15, 25] | [-32:-30, 30:31] |
| 3 | [-28, -20, -12, -4, 4, 12, 20] | [-32:-31, 30:31] |
| 4 | [-28, -20, -12, -4, 4, 12, 20, 28] | [-32:-31, 31] |
| 5 | [-27, -21, -15, -9, -3, 3, 9, 15, 21] | [-32, 31] |
| 6 | [-27, -21, -15, -9, -3, 3, 9, 15, 21, 27] | [-32] |
| 7 | [-28, -23, -18, -13, -8, -3, 3, 8, 13, 18, 23] | [] (that is, no guard subcarrier) |

The first guard subcarriers shown in Table 2 may be distributed on an entire frequency band as evenly and discretely as possible and in a manner of symmetrical positive and negative frequencies. This can effectively improve accuracy of the phase offset and/or the frequency offset by the receive end. The first pilot subcarriers shown in Table 2 are far away from the filter, and therefore, security is high. It may be understood that all remaining index values other than the index values of the first pilot subcarriers shown in Table 2, the index values of the first guard subcarriers shown in Table 2, and the index value of the direct current subcarrier (the index value is 0) in the index values -32:31 are the index values of the first data subcarriers.

It may be understood that the last row in each of Table 1 and Table 2 indicates that there is no guard subcarrier. Optionally, when the high frequency channel includes no guard subcarrier, a guard bandwidth shown below may be used as a transition band bandwidth with reference to the guard bandwidth shown below. It may be understood that the descriptions of the guard subcarrier are also applicable to the following example 2 to example 7. Details are not described below again.

For the example 1 shown in this embodiment of this application, the bandwidth of the first low frequency channel may be 20 MHz, and the bandwidth of the first high frequency channel may be any one of 270 MHz, 540 MHz, 1080 MHz, and 2160 MHz.

Example 2

In the 802.11ac protocol, a tone plan in a 40 MHz bandwidth may be shown as follows: 128 subcarriers are included, and index values of the subcarriers are sequentially defined as -64:63. Subcarriers whose index values are -1, 0, and 1 are direct current subcarriers, and carried values are 0; subcarriers whose index values are -64:-59 and 59:63 are guard subcarriers, that is, [-64, -63, -62, -61, -60, -59, 59, 60, 61, 62, 63], and carried values are 0; subcarriers whose index values are [-53, -25, -11, 11, 25, 53] are pilot subcarriers, and carried values are +1 or -1; and the rest is a data subcarrier. In 802.11ac, the pilot subcarrier shown herein is the second pilot subcarrier shown in this embodiment of this application, the guard subcarrier shown herein is a guard subcarrier corresponding to the second pilot subcarrier, and the data subcarrier shown herein is a data subcarrier corresponding to the second pilot subcarrier.

For the relationship between the pilot subcarrier in the high frequency channel and the data subcarrier in the low frequency channel, the relationship between the pilot subcarrier in the high frequency channel and the pilot subcarrier in the low frequency channel, and the relationship between the pilot subcarrier in the high frequency channel and the guard subcarrier in the low frequency channel, refer to the descriptions in the example 1. Details are not described herein again. For example, the index value of the first pilot subcarrier may meet at least one of the following: Index values of first pilot subcarriers are the same as index values of the foregoing 1 to 11 second guard subcarriers, and index values of first pilot subcarriers are the same as index values of the 1 to 6 second pilot subcarriers. A location of each first pilot subcarrier shown in Table 3 may be determined based on a subcarrier spacing of the first high frequency channel and the index value of the first pilot subcarrier. For another example, the index value of the first pilot subcarrier may meet at least one of the following: Index values of first pilot subcarriers are the same as index values of one or more second data subcarriers, and index values of first pilot subcarriers are the same as index values of the 1 to 6 second pilot subcarriers. The first pilot subcarriers shown in Table 4 may be understood as reconfigured pilot subcarriers.

For example, Table 3 and Table 4 show the index values of the first pilot subcarriers and the index values of the first guard subcarriers, that are provided in this embodiment of this application. For Table 3 and Table 4, [-53, -25, -11, 11, 25, 53] are the same as the index values of the second pilot subcarriers, and [-64, -63, -62, -61, -60, -59, 59, 60, 61, 62, 63] are the same as the index values of the second guard subcarriers. For example, in the second row in Table 3, the subcarrier corresponding to -59 in the index values of the first pilot subcarriers may be understood as having a mapping relationship with the guard subcarrier in the 40 MHz bandwidth in 802.11ac. In other words, the subcarrier that is in the high frequency channel and whose index value is the same as that of the guard subcarrier in the low frequency channel is used as the pilot subcarrier. For another example, in the second row in Table 4, the subcarriers corresponding to the index values [-49, -35, -21, -7, 7, 21, 35] of the first pilot subcarriers may be understood as having mapping relationships with the data subcarriers in the 40 MHz bandwidth in 802.11ac (namely, seven data subcarriers corresponding to the second pilot subcarriers) respectively. In other words, the subcarrier that is in the high frequency channel and whose index value is the same as that of the data subcarrier in the low frequency channel is used as the pilot subcarrier.

**Table 3**

| Quantity of added pilot subcarriers | Index values of the first pilot subcarriers | Index values of the first guard subcarriers |
|---|---|---|
| 1 | [-59, -53, -25, -11, 11, 25, 53] | [-64:-60, 59:63] |
| 2 | [-59, -53, -25, -11, 11, 25, 53, 59] | [-64:-60, 60:63] |
| 3 | [-60, -59, -53, -25, -11, 11, 25, 53, 59] | [-64:-61, 60:63] |
| 4 | [-60, -59, -53, -25, -11, 11, 25, 53, 59, 60] | [-64:-61, 61:63] |
| 5 | [-61, -60, -59, -53, -25, -11, 11, 25, 53, 59, 60] | [-64:-62, 61:63] |
| 6 | [-61, -60, -59, -53, -25, -11, 11, 25, 53, 59, 60, 61] | [-64:-62, 62:63] |

(continued)

| Quantity of added pilot subcarriers | Index values of the first pilot subcarriers | Index values of the first guard subcarriers |
|---|---|---|
| 7 | [-62, -61, -60, -59, -53, -25, -11, 11, 25, 53, 59, 60, 61] | [-64:-63, 62:63] |
| 8 | [-62, -61, -60, -59, -53, -25, -11, 11, 25, 53, 59, 60, 61, 62] | [-64:-63, 63] |
| 9 | [-63, -62, -61, -60, -59, -53, -25, -11, 11, 25, 53, 59, 60, 61, 62] | [-64, 63] |
| 10 | [-63, -62, -61, -60, -59, -53, -25, -11, 11, 25, 53, 59, 60, 61, 62, 63] | [-64] |
| 11 | [-64, -63, -62, -61, -60, -59, -53, -25, -11, 11, 25, 53, 59, 60, 61, 62, 63] | [] (that is, no guard subcarrier) |

It may be understood that all remaining index values other than the index values of the first pilot subcarriers shown in Table 3, the index values of the first guard subcarriers shown in Table 3, and the index values of the direct current subcarriers (the index values are -1, 0, and 1) in the index values -64:63 are index values of the first data subcarriers.

**Table 4**

| Quantity of added pilot subcarriers | Index values of the first pilot subcarriers | Index values of the first guard subcarriers |
|---|---|---|
| 1 | [-49, -35, -21, -7, 7, 21, 35] | [-64:-60, 59:63] |
| 2 | [-49, -35, -21, -7, 7, 21, 35, 49] | [-64:-60, 60:63] |
| 3 | [-54, -42, -30, -18, -6, 6 18, 30, 42] | [-64:-61, 60:63] |
| 4 | [-54, -42, -30, -18, -6, 6 18, 30, 42, 54] | [-64:-61, 61:63] |
| 5 | [-55, -45, -35, -25, -15, -5, 5, 15, 25, 35, 45] | [-64:-62, 61:63] |
| 6 | [-55, -45, -35, -25, -15, -5, 5, 15, 25, 35, 45, 55] | [-64:-62, 62:63] |
| 7 | [-52, -44, -36, -28, -20, -12, -4, 4, 12, 20, 28, 36, 44] | [-64:-63, 62:63] |
| 8 | [-52, -44, -36, -28, -20, -12, -4, 4, 12, 20, 28, 36, 44, 52] | [-64:-63, 63] |
| 9 | [-53, -46, -39, -32, -25, -18, -11, -4, 4, 11, 18, 25, 32, 39, 46] | [-64, 63] |
| 10 | [-53, -46, -39, -32, -25, -18, -11, -4, 4, 11, 18, 25, 32, 39, 46, 53] | [-64] |
| 11 | [-58, -52, -46, -40, -34, -28, -22, -16, -10, -4, 4, 10, 16, 22, 28, 34, 40, 46, 52] | [] (that is, no guard subcarrier) |

It may be understood that all remaining index values other than the index values of the first pilot subcarriers shown in Table 4, the index values of the first guard subcarriers shown in Table 4, and the index values of the direct current subcarriers (the index values are -1, 0, and 1) in the index values -64:63 are the index values of the first data subcarriers.

For the example 2 shown in this embodiment of this application, the bandwidth of the first low frequency channel may be 40 MHz, and the bandwidth of the first high frequency channel may be any one of 540 MHz, 1080 MHz, 2160 MHz, and 4320 MHz.

Example 3

In the 802.11ac protocol, a tone plan in an 80 MHz bandwidth may be shown as follows: 256 subcarriers are included, and index values of the subcarriers are sequentially defined as - 128:127. Subcarriers whose index values are -1, 0, and 1 are direct current subcarriers, and carried values are 0; subcarriers whose index values are -128:-123 and 123:127 are guard subcarriers, that is, [-128, -127, -126, -125, -124, -123, 123, 124, 125, 126, 127], and carried values are 0; subcarriers whose index values are [-103, -75, -39, -11, 11, 39, 75, 103] are pilot subcarriers, and carried values are +1/-1;

and the rest is a data subcarrier. In 802.11ac, the pilot subcarrier shown herein is the second pilot subcarrier shown in this embodiment of this application, the guard subcarrier shown herein is a guard subcarrier corresponding to the second pilot subcarrier, and the data subcarrier shown herein is a data subcarrier corresponding to the second pilot subcarrier.

For the relationship between the pilot subcarrier in the high frequency channel and the data subcarrier in the low frequency channel, the relationship between the pilot subcarrier in the high frequency channel and the pilot subcarrier in the low frequency channel, and the relationship between the pilot subcarrier in the high frequency channel and the guard subcarrier in the low frequency channel, refer to the descriptions in the example 1 and the example 2. Details are not described herein again. For example, the index value of the first pilot subcarrier may meet at least one of the following: Index values of first pilot subcarriers are the same as index values of the foregoing 1 to 11 second guard subcarriers, and index values of first pilot subcarriers are the same as index values of the foregoing 1 to 8 second pilot subcarriers. A location of each first pilot subcarrier shown in Table 5 may be determined based on a subcarrier spacing of the first high frequency channel and the index value of the first pilot subcarrier. For another example, the index value of the first pilot subcarrier may meet at least one of the following: Index values of first pilot subcarriers are the same as index values of one or more second data subcarriers, and index values of first pilot subcarriers are the same as index values of the 1 to 8 second pilot subcarriers. The first pilot subcarriers shown in Table 6 may be understood as reconfigured pilot subcarriers.

For example, Table 5 and Table 6 show the index values of the first pilot subcarriers and the index values of the first guard subcarriers, that are provided in this embodiment of this application.

**Table 5**

| Quantity of added pilot subcarriers | Index values of the first pilot subcarriers | Index values of the first guard subcarriers |
|---|---|---|
| 1 | [-123, -103, -75, -39, -11, 11, 39, 75, 103] | [-128:-124, 123:127] |
| 2 | [-123, -103, -75, -39, -11, 11, 39, 75, 103, 123] | [-128:-124, 124:127] |
| 3 | [-124, -123, -103, -75, -39, -11, 11, 39, 75, 103, 123] | [-128:-125, 124:127] |
| 4 | [-124, -123, -103, -75, -39, -11, 11, 39, 75, 103, 123, 124] | [-128:-125, 125:127] |
| 5 | [-125, -124, -123, -103, -75, -39, -11, 11, 39, 75, 103, 123, 124] | [-128:-126, 125:127] |
| 6 | [-125, -124, -123, -103, -75, -39, -11, 11, 39, 75, 103, 123, 124, 125] | [-128:-126, 126:127] |
| 7 | [-126, -125, -124, -123, -103, -75, -39, -11, 11, 39, 75, 103, 123, 124, 125] | [-128:-127, 126:127] |
| 8 | [-126, -125, -124, -123, -103, -75, -39, -11, 11, 39, 75, 103, 123, 124, 125, 126] | [-128:-127, 127] |
| 9 | [-127, -126, -125, -124, -123, -103, -75, -39, -11, 11, 39, 75, 103, 123, 124, 125, 126] | [-128, 127] |
| 10 | [-127, -126, -125, -124, -123, -103, -75, -39, -11, 11, 39, 75, 103, 123, 124, 125, 126, 127] | [-128] |
| 11 | [-128, -127, -126, -125, -124, -123, -103, - 75, -39, -11, 11, 39, 75, 103, 123, 124, 125, 126, 127] | [] (that is, no guard subcarrier) |

It may be understood that all remaining index values other than the index values of the first pilot subcarriers shown in Table 5, the index values of the first guard subcarriers shown in Table 5, and the index values of the direct current subcarriers (the index values are -1, 0, and 1) in the index values -128:127 are index values of the first data subcarriers.

**Table 6**

| Quantity of added pilot subcarriers | Index values of the first pilot subcarriers | Index values of the first guard subcarriers |
|---|---|---|
| 1 | [-108, -84, -60, -36, -12, 12, 36, 60, 84] | [-128:-124, 123:127] |
| 2 | [-108, -84, -60, -36, -12, 12, 36, 60, 84, 108] | [-128:-124, 124:127] |
| 3 | [-110, -90, -70, -50, -30, -10, 10, 30, 50, 70, 90] | [-128:-125, 124:127] |
| 4 | [-110, -90, -70, -50, -30, -10, 10, 30, 50, 70, 90, 110] | [-128:-125, 125:127] |

(continued)

| Quantity of added pilot subcarriers | Index values of the first pilot subcarriers | Index values of the first guard subcarriers |
|---|---|---|
| 5 | [-117, -99, -81, -63, -45, -27, -9, 9, 27, 45, 63, 81, 99] | [-128:-126, 125:127] |
| 6 | [-117, -99, -81, -63, -45, -27, -9, 9, 27, 45, 63, 81, 99, 117] | [-128:-126, 126:127] |
| 7 | [-113, -98, -83, -68, -53, -38, -23, -8, 8, 23, 38, 53, 68, 83, 98] | [-128:-127, 126:127] |
| 8 | [-113, -98, -83, -68, -53, -38, -23, -8, 8, 23, 38, 53, 68, 83, 98, 113] | [-128:-127, 127] |
| 9 | [-113, -98, -85, -72, -59, -46, -33, -20, -7, 7, 20, 33, 46, 59, 72, 85, 98] | [-128, 127] |
| 10 | [-113, -98, -85, -72, -59, -46, -33, -20, -7, 7, 20, 33, 46, 59, 72, 85, 98, 113] | [-128] |
| 11 | [-114, -102, -90, -78, -66, -54, -42, -30, -18, -6, 6, 18, 30, 42, 54, 66, 78, 90, 102] | [] (that is, no guard subcarrier) |

It may be understood that all remaining index values other than the index values of the first pilot subcarriers shown in Table 6, the index values of the first guard subcarriers shown in Table 6, and the index values of the direct current subcarriers (the index values are -1, 0, and 1) in the index values -128:127 are the index values of the first data subcarriers.

For the example 1 shown in this embodiment of this application, the bandwidth of the first low frequency channel may be 80 MHz, and the bandwidth of the first high frequency channel may be any one of 1080 MHz, 2160 MHz, 4320 MHz, and 8640 MHz.

Example 4

In the 802.11ax protocol, a tone plan in a 20 MHz bandwidth may be shown as follows: 256 subcarriers are included, and index values of the subcarriers are sequentially defined as - 128:127. Subcarriers whose index values are -1, 0, and 1 are direct current subcarriers, and carried values are 0; subcarriers whose index values are -128:-123 and 123:127 are guard subcarriers, that is, [-128, -127, -126, -125, -124, -123, 123, 124, 125, 126, 127], and carried values are 0; subcarriers whose index values are [-116, -90, -48, -22, 22, 48, 90, 116] are pilot subcarriers, and carried values are +1/-1; and the rest is a data subcarrier. In 802.11ax, the pilot subcarrier shown herein is the second pilot subcarrier shown in this embodiment of this application, the guard subcarrier shown herein is a guard subcarrier corresponding to the second pilot subcarrier, and the data subcarrier shown herein is a data subcarrier corresponding to the second pilot subcarrier.

For the relationship between the pilot subcarrier in the high frequency channel and the data subcarrier in the low frequency channel, the relationship between the pilot subcarrier in the high frequency channel and the pilot subcarrier in the low frequency channel, and the relationship between the pilot subcarrier in the high frequency channel and the guard subcarrier in the low frequency channel, refer to the descriptions in the example 1 to the example 3. Details are not described herein again. A location of each first pilot subcarrier shown in Table 7 may be determined based on a subcarrier spacing of the first high frequency channel and the index value of the first pilot subcarrier. The first pilot subcarriers shown in Table 8 may be understood as reconfigured pilot subcarriers.

For example, Table 7 and Table 8 show the index values of the first pilot subcarriers and the index values of the first guard subcarriers, that are provided in this embodiment of this application.

**Table 7**

| Quantity of pilot subcarriers | Index values of the first pilot subcarriers | Index values of guard subcarriers corresponding to the first pilot subcarriers |
|---|---|---|
| 1 | [-123, -116, -90, -48, -22, 22, 48, 90, 116] | [-128:-124, 123:127] |
| 2 | [-123, -116, -90, -48, -22, 22, 48, 90, 116, 123] | [-128:-124, 124:127] |
| 3 | [-124, -123, -116, -90, -48, -22, 22, 48, 90, 116, 123] | [-128:-125, 124:127] |
| 4 | [-124, -123, -116, -90, -48, -22, 22, 48, 90, 116, 123, 124] | [-128:-125, 125:127] |

(continued)

| Quantity of pilot subcarriers | Index values of the first pilot subcarriers | Index values of guard subcarriers corresponding to the first pilot subcarriers |
|---|---|---|
| 5 | [-125, -124, -123, -116, -90, -48, -22, 22, 48, 90, 116, 123, 124] | [-128:-126, 125:127] |
| 6 | [-125, -124, -123, -116, -90, -48, -22, 22, 48, 90, 116, 123, 124, 125] | [-128:-126, 126:127] |
| 7 | [-126, -125, -124, -123, -116, -90, -48,-22, 22, 48, 90, 116, 123, 124, 125] | [-128:-127, 126:127] |
| 8 | [-126, -125, -124, -123, -116, -90, -48,-22, 22, 48, 90, 116, 123, 124, 125, 126] | [-128:-127, 127] |
| 9 | [-127, -126, -125, -124, -123, -116, -90,-48, -22, 22, 48, 90, 116, 123, 124, 125, 126] | [-128, 127] |
| 10 | [-127, -126, -125, -124, -123, -116, -90,-48, -22, 22, 48, 90, 116, 123, 124, 125, 126, 127] | [-128] |
| 11 | [-128, -127, -126, -125, -124, -123, -116, -90, -48, -22, 22, 48, 90, 116, 123, 124, 125, 126, 127] | [] (that is, no guard subcarrier) |

It may be understood that all remaining index values other than the index values of the first pilot subcarriers shown in Table 7, the index values of the first guard subcarriers shown in Table 7, and the index values of the direct current subcarriers (the index values are -1, 0, and 1) in the index values -128:127 are index values of the first data subcarriers.

**Table 8**

| Quantity of pilot subcarriers | Index values of the first pilot subcarriers | Index values of guard subcarriers corresponding to the first pilot subcarriers |
|---|---|---|
| 1 | [-108, -84, -60, -36, -12, 12, 36, 60, 84] | [-128:-124, 123:127] |
| 2 | [-108, -84, -60, -36, -12, 12, 36, 60, 84, 108] | [-128:-124, 124:127] |
| 3 | [-110, -90, -70, -50, -30, -10, 10, 30, 50, 70, 90] | [-128:-125, 124:127] |
| 4 | [-110, -90, -70, -50, -30, -10, 10, 30, 50, 70, 90, 110] | [-128:-125, 125:127] |
| 5 | [-117, -99, -81, -63, -45, -27, -9, 9, 27, 45, 63, 81, 99] | [-128:-126, 125:127] |
| 6 | [-117, -99, -81, -63, -45, -27, -9, 9, 27, 45, 63, 81, 99, 117] | [-128:-126, 126:127] |
| 7 | [-113, -98, -83, -68, -53, -38, -23, -8, 8, 23, 38, 53, 68, 83, 98] | [-128:-127, 126:127] |
| 8 | [-113, -98, -83, -68, -53, -38, -23, -8, 8, 23, 38, 53, 68, 83, 98, 113] | [-128:-127, 127] |
| 9 | [-113, -98, -85, -72, -59, -46, -33, -20, -7, 7, 20, 33, 46, 59, 72, 85, 98] | [-128, 127] |
| 10 | [-113, -98, -85, -72, -59, -46, -33, -20, -7, 7, 20, 33, 46, 59, 72, 85, 98, 113] | [-128] |
| 11 | [-114, -102, -90, -78, -66, -54, -42,-30, -18, -6, 6, 18, 30, 42, 54, 66, 78, 90, 102] | [] (that is, no guard subcarrier) |

It may be understood that all remaining index values other than the index values of the first pilot subcarriers shown in Table 8, the index values of the first guard subcarriers shown in Table 8, and the index values of the direct current subcarriers (the index values are -1, 0, and 1) in the index values -128:127 are the index values of the first data subcarriers.

For the example 4 shown in this embodiment of this application, the bandwidth of the first low frequency channel may be 20 MHz, and the bandwidth of the first high frequency channel may be either 1080 MHz or 2160 MHz.

Example 5

In the 802.11ax protocol, a tone plan in a 40 MHz bandwidth may be shown as follows: 512 subcarriers are included, and index values of the subcarriers are sequentially defined as -256:255. Subcarriers whose index values are -2, -1, 0, 1, and 2 are direct current subcarriers, and carried values are 0; subcarriers whose index values are -256:-245 and 245:255 are guard subcarriers, that is, [-256, -255, -254, -253, -252, -251, -250, -249, -248, -247, -246, -245, 245, 246, 247, 248, 249, 250, 251, 252, 253, 254, 255], and carried values are 0; subcarriers whose index values are [-238, -212, -170, -144, -104, -78, -36, -10, 10, 36, 78, 104, 144, 170, 212, 238] are pilot subcarriers, and carried values are +1/-1; and the rest is a data subcarrier. In 802.11ax, the pilot subcarrier shown herein is the second pilot subcarrier shown in this embodiment of this application, the guard subcarrier shown herein is a guard subcarrier corresponding to the second pilot subcarrier, and the data subcarrier shown herein is a data subcarrier corresponding to the second pilot subcarrier.

For the relationship between the pilot subcarrier in the high frequency channel and the data subcarrier in the low frequency channel, the relationship between the pilot subcarrier in the high frequency channel and the pilot subcarrier in the low frequency channel, and the relationship between the pilot subcarrier in the high frequency channel and the guard subcarrier in the low frequency channel, refer to the descriptions in the example 1 to the example 4. Details are not described herein again. A location of each first pilot subcarrier shown in Table 9 may be determined based on a subcarrier spacing of the first high frequency channel and the index value of the first pilot subcarrier. The first pilot subcarriers shown in Table 10 may be understood as reconfigured pilot subcarriers.

For example, Table 9 and Table 10 show the index values of the first pilot subcarriers and the index values of the first guard subcarriers, that are provided in this embodiment of this application.

**Table 9**

| Quantity of pilot subcarriers | Index values of the first pilot subcarriers | Index values of the first guard subcarriers |
|---|---|---|
| 2 | [-245, -238, -212, -170, -144, -104, -78, -36, -10, 10, 36, 78, 104, 144, 170, 212, 238, 245] | [-256:-246, 246:255] |
| 4 | [-246, -245, -238, -212, -170, -144, -104, -78, -36,-10, 10, 36, 78, 104, 144, 170, 212, 238, 245, 246] | [-256:-247, 247:255] |
| 6 | [-247, -246, -245, -238, -212, -170, -144, -104, -78, -36, -10, 10, 36, 78, 104, 144, 170, 212, 238, 245, 246, 247] | [-256:-248, 248:255] |
| 8 | [-248, -247, -246, -245, -238, -212, -170, -144,-104, -78, -36, -10, 10, 36, 78, 104, 144, 170, 212, 238, 245, 246, 247, 248] | [-256:-249, 249:255] |
| 10 | [-249, -248, -247, -246, -245, -238, -212, -170,-144, -104, -78, -36, -10, 10, 36, 78, 104, 144, 170, 212, 238, 245, 246, 247, 248, 249] | [-256:-250, 250:255] |
| 12 | [-250, -249, -248, -247, -246, -245, -238, -212,-170, -144, -104, -78, -36, -10, 10, 36, 78, 104, 144, 170, 212, 238, 245, 246, 247, 248, 249, 250] | [-256:-251, 251:255] |
| 14 | [-251, -250, -249, -248, -247, -246, -245, -238,-212, -170, -144, -104, -78, -36, -10, 10, 36, 78, 104, 144, 170, 212, 238, 245, 246, 247, 248, 249, 250, 251] | [-256:-252, 252:255] |
| 16 | [-252, -251, -250, -249, -248, -247, -246, -245,-238, -212, -170, -144, -104, -78, -36, -10, 10, 36, 78, 104, 144, 170, 212, 238, 245, 246, 247, 248, 249, 250, 251, 252] | [-256:-253, 253:255] |
| 18 | [-253, -252, -251, -250, -249, -248, -247, -246,-245, -238, -212, -170, -144, -104, -78, -36, -10, 10, 36, 78, 104, 144, 170, 212, 238, 245, 246, 247, 248, 249, 250, 251, 252, 253] | [-256:-254, 254:255] |
| 20 | [-254, -253, -252, -251, -250, -249, -248, -247,-246, -245, -238, -212, -170, -144, -104, -78, -36,-10, 10, 36, 78, 104, 144, 170, 212, 238, 245, 246, 247, 248, 249, 250, 251, 252, 253, 254] | [-256:-255, 255] |

(continued)

| Quantity of pilot subcarriers | Index values of the first pilot subcarriers | Index values of the first guard subcarriers |
|---|---|---|
| 22 | [-255, -254, -253, -252, -251, -250, -249, -248,-247, -246, -245, -238, -212, -170, -144, -104, -78,-36, -10, 10, 36, 78, 104, 144, 170, 212, 238, 245, 246, 247, 248, 249, 250, 251, 252, 253, 254, 255] | [-256] |

It may be understood that all remaining index values other than the index values of the first pilot subcarriers shown in Table 9, the index values of the first guard subcarriers shown in Table 9, and the index values of the direct current subcarriers (the index values are -2, -1, 0, 1, and 2) in the index values -256:255 are index values of the first data subcarriers.

**Table 10**

| Quantity of pilot subcarriers | Index values of the first pilot subcarriers | Index values of the first guard subcarriers |
|---|---|---|
| 2 | [-229, -202, -175, -148, -121, -94, -67, -40, -13, 13, 40, 67, 94, 121, 148, 175, 202, 229] | [-256:-246, 246:255] |
| 4 | [-228, -204, -180, -156, -132, -108, -84, -60, -36,-12, 12, 36, 60, 84, 108, 132, 156, 180, 204, 228] | [-256:-247, 247:255] |
| 6 | [-231, -209, -187, -165, -143, -121, -99, -77, -55,-33, -11, 11, 33, 55, 77, 99, 121, 143, 165, 187, 209, 231] | [-256:-248, 248:255] |
| 8 | [-230, -210, -190, -170, -150, -130, -110, -90, -70,-50, -30, -10, 10, 30, 50, 70, 90, 110, 130, 150, 170, 190, 210, 230] | [-256:-249, 249:255] |
| 10 | [-225, -207, -189, -171, -153, -135, -117, -99, -81,-63, -45, -27, -9, 9, 27, 45, 63, 81, 99, 117, 135, 153, 171, 189, 207, 225] | [-256:-250, 250:255] |
| 12 | [-230, -213, -196, -179, -162, -145, -128, -111, -94, -77, -60, -43, -26, -9, 9, 26, 43, 60, 77, 94, 111, 128, 145, 162, 179, 196, 213, 230] | [-256:-251, 251:255] |
| 14 | [-232, -216, -200, -184, -168, -152, -136, -120, -104, -88, -72, -56, -40, -24, -8, 8, 24, 40, 56, 72, 88, 104, 120, 136, 152, 168, 184, 200, 216, 232] | [-256:-252, 252:255] |
| 16 | [-233, -218, -203, -188, -173, -158, -143, -128, -113, -98, -83, -68, -53, -38, -23, -8, 8, 23, 38, 53, 68, 83, 98, 113, 128, 143, 158, 173, 188, 203, 218, 233] | [-256:-253, 253:255] |
| 18 | [-231, -217, -203, -189, -175, -161, -147, -133, -119, -105, -91, -77, -63, -49, -35, -21, -7, 7, 21, 35, 49, 63, 77, 91, 105, 119, 133, 147, 161, 175, 189, 203, 217, 231] | [-256:-254, 254:255] |
| 20 | [-228, -215, -202, -189, -176, -163, -150, -137, -124, -111, -98, -85, -72, -59, -46, -33, -20, -7, 7, 20, 33, 46, 59, 72, 85, 98, 111, 124, 137, 150, 163, 176, 189, 202, 215, 228] | [-256:-255, 255] |
| 22 | [-222, -210, -198, -186, -174, -162, -150, -138, -126, -114, -102, -90, -78, -66, -54, -42, -30, -18, -6, 6, 18, 30, 42, 54, 66, 78, 90, 102, 114, 126, 138, 150, 162, 174, 186, 198, 210, 222] | [-256] |

It may be understood that all remaining index values other than the index values of the first pilot subcarriers shown in Table 10, the index values of the first guard subcarriers shown in Table 10, and the index values of the direct current subcarriers (the index values are -2, -1, 0, 1, and 2) in the index values -256:255 are the index values of the first data subcarriers.

For the example 5 shown in this embodiment of this application, the bandwidth of the first low frequency channel may be 40 MHz, and the bandwidth of the first high frequency channel may be any one of 1080 MHz, 2160 MHz, and 4320 MHz.

Example 6

In the 802.11ax protocol, a tone plan in an 80 MHz bandwidth may be shown as follows: 1024 subcarriers are included, and index values of the subcarriers are sequentially defined as - 512:511. Subcarriers whose index values are -2, -1, 0, 1, and 2 are direct current subcarriers, and carried values are 0; subcarriers whose index values are -512:-501 and 501:511 are guard subcarriers, that is, [-512, -511, -510, -519, -518, -517, -516, -515, -514, -513, -512, -510, - 509, -508, -507, -506, -505, -504, -503, -502, -501, 501, 502, 503, 504, 505, 506, 507, 508, 509, 510, 511], and carried values are 0; subcarriers whose index values are [-468, -400, -334, -266, -226, -158, -92, -24, 24, 92, 158, 226, 266, 334, 400, 468] are pilot subcarriers, and carried values are +1/-1; and the rest is a data subcarrier. In 802.11ax, the pilot subcarrier shown herein is the second pilot subcarrier shown in this embodiment of this application, the guard subcarrier shown herein is a guard subcarrier corresponding to the second pilot subcarrier, and the data subcarrier shown herein is a data subcarrier corresponding to the second pilot subcarrier.

For the relationship between the pilot subcarrier in the high frequency channel and the data subcarrier in the low frequency channel, the relationship between the pilot subcarrier in the high frequency channel and the pilot subcarrier in the low frequency channel, and the relationship between the pilot subcarrier in the high frequency channel and the guard subcarrier in the low frequency channel, refer to the descriptions in the example 1 to the example 5. Details are not described herein again. A location of each first pilot subcarrier shown in Table 11 may be determined based on a subcarrier spacing of the first high frequency channel and the index value of the first pilot subcarrier. The first pilot subcarriers shown in Table 12 may be understood as reconfigured pilot subcarriers.

For example, Table 11 and Table 12 show the index values of the first pilot subcarriers and the index values of the first guard subcarriers, that are provided in this embodiment of this application.

**Table 11**

| Quantity of added pilot subcarriers | Index values of the first pilot subcarriers | Index values of the first guard subcarriers |
|---|---|---|
| 2 | [-501, -468, -400, -334, -266, -226, -158, -92, -24, 24, 92, 158, 226, 266, 334, 400, 468, 501] | [-512:-502, 502:511] |
| 4 | [-502, -501, -468, -400, -334, -266, -226, -158, -92, -24, 24, 92, 158, 226, 266, 334, 400, 468, 501, 502] | [-512:-503, 503:511] |
| 6 | [-503, -502, -501, -468, -400, -334, -266, -226,-158, -92, -24, 24, 92, 158, 226, 266, 334, 400, 468, 501, 502, 503] | [-512:-504, 504:511] |
| 8 | [-504, -503, -502, -501, -468, -400, -334, -266,-226, -158, -92, -24, 24, 92, 158, 226, 266, 334, 400, 468, 501, 502, 503, 504] | [-512:-505, 505:511] |
| 10 | [-505, -504, -503, -502, -501, -468, -400, -334,-266, -226, -158, -92, -24, 24, 92, 158, 226, 266, 334, 400, 468, 501, 502, 503, 504, 505] | [-512:-506, 506:511] |
| 12 | [-506, -505, -504, -503, -502, -501, -468, -400,-334, -266, -226, -158, -92, -24, 24, 92, 158, 226, 266, 334, 400, 468, 501, 502, 503, 504, 505, 506] | [-512:-507, 507:511] |
| 14 | [-507, -506, -505, -504, -503, -502, -501, -468,-400, -334, -266, -226, -158, -92, -24, 24, 92, 158, 226, 266, 334, 400, 468, 501, 502, 503, 504, 505, 506, 507] | [-512:-508, 508:511] |
| 16 | [-508, -507, -506, -505, -504, -503, -502, -501,-468, -400, -334, -266, -226, -158, -92, -24, 24, 92, 158, 226, 266, 334, 400, 468, 501, 502, 503, 504, 505, 506, 507, 508] | [-512:-509, 509:511] |
| 18 | [-509, -508, -507, -506, -505, -504, -503, -502,-501, -468, -400, -334, -266, -226, -158, -92, -24, 24, 92, 158, 226, 266, 334, 400, 468, 501, 502, 503, 504, 505, 506, 507, 508, 509] | [-512:-510, 510:511] |
| 20 | [-510, -509, -508, -507, -506, 505, -504, -503,-502, -501, -468, -400, -334, -266, -226, -158, -92,-24, 24, 92, 158, 226, 266, 334, 400, 468, 501, 502, 503, 504, 505, 506, 507, 508, 509, 510] | [-512:-511, 511] |
| 22 | [-511,-510,-509,-508,-507,-506,-505,-504,-503, -502, -501, -468, -400, -334, -266, -226, -158, -92, -24, 24, 92, 158, 226, 266, 334, 400, 468, 501, 502, 503, 504, 505, 506, 507, 508, 509, 510, 511] | [-512] |

It may be understood that all remaining index values other than the index values of the first pilot subcarriers shown in Table 11, the index values of guard subcarriers corresponding to the first pilot subcarriers shown in Table 11, and the direct current subcarriers (the index values are -2, -1, 0, 1, and 2) in the index values -512:511 are index values of data subcarriers corresponding to the first pilot subcarriers.

**Table 12**

| Quantity of added pilot subcarriers | Index values of the first pilot subcarriers | Index values of the first guard subcarriers |
|---|---|---|
| 2 | [-476, -420, -364, -308, -252, -196, -140, -84, -28, 28, 84, 140, 196, 252, 308, 364, 420, 476] | [-512:-502, 502:511] |
| 4 | [-475, -425, -375, -325, -275, -225, -175, -125, -75, -25, 25, 75, 125, 175, 225, 275, 325, 375, 425, 475] | [-512:-503, 503:511] |
| 6 | [-462, -418, -374, -330, -286, -242, -198, -154,-110, -66, -22, 22, 66, 110, 154, 198, 242, 286, 330, 374, 418, 462] | [-512:-504, 504:511] |
| 8 | [-483, -441, -399, -357, -315, -273, -231, -189,-147, -105, -63, -21, 21, 63, 105, 147, 189, 231, 273, 315, 357, 399, 441, 483] | [-512:-505, 505:511] |
| 10 | [-475, -437, -399, -361, -323, -285, -247, -209,-171, -133, -95, -57, -19, 19, 57, 95, 133, 171, 209, 247, 285, 323, 361, 399, 437, 475] | [-512:-506, 506:511] |
| 12 | [-486, -450, -414, -378, -342, -306, -270, -234,-198, -162, -126, -90, -54, -18, 18, 54, 90, 126, 162, 198, 234, 270, 306, 342, 378, 414, 450, 486] | [-512:-507, 507:511] |
| 14 | [-478, -445, -412, -379, -346, -313, -280, -247,-214, -181, -148, -115, -82, -49, -16, 16, 49, 82, 115, 148, 181, 214, 247, 280, 313, 346, 379, 412, 445, 478] | [-512:-508, 508:511] |
| 16 | [-480, -449, -418, -387, -356, -325, -294, -263,-232, -201, -170, -139, -108, -77, -46, -15, 15, 46, 77, 108, 139, 170, 201, 232, 263, 294, 325, 356, 387, 418, 449, 480] | [-512:-509, 509:511] |
| 18 | [-495, -465, -435, -405, -375, -345, -315, -285,-255, -225, -195, -165, -135, -105, -75, -45, -15, 15, 45, 75, 105, 135, 165, 195, 225, 255, 285, 315, 345, 375, 405, 435, 465, 495] | [-512:-510, 510:511] |
| 20 | [-490, -462, -434, -406, -378, -350, -322, -294,-266, -238, -210, -182, -154, -126, 98, -70, -42, -14, 14, 42, 70, 98, 126, 154, 182, 210, 238, 266, 294, 322, 350, 378, 406, 434, 462, 490] | [-512:-511, 511] |
| 22 | [-481, -455, -429, -403, -377, -351, -325, -299,-273,-247,-221,-195,-169,-143,-117,-91,-65,-39, -13, 13, 39, 65, 91, 117, 143, 169, 195, 221, 247, 273, 299, 325, 351, 377, 403, 429, 455, 481] | [-512] |

It may be understood that all remaining index values other than the index values of the first pilot subcarriers shown in Table 12, the index values of the first guard subcarriers shown in Table 12, and the index values of the direct current subcarriers (the index values are -2, -1, 0, 1, and 2) in the index values -256:255 are the index values of the first data subcarriers.

For the example 6 shown in this embodiment of this application, the bandwidth of the first low frequency channel may be 80 MHz, and the bandwidth of the first high frequency channel may be either 4320 MHz or 8640 MHz.

Example 7

In the 802.11be protocol, a tone plan in an 80 MHz bandwidth may be shown as follows: 1024 subcarriers are included, and index values of the subcarriers are sequentially defined as - 512:511. Subcarriers whose index values are -2, -1, 0, 1, and 2 are direct current subcarriers, and carried values are 0; subcarriers whose index values are -512:-501 and 501:511 are guard subcarriers, and carried values are 0; subcarriers whose index values are [-468, -400, -334, -266, -220, -152, -86, -18, 18, 86, 152, 220, 266, 334, 400, 468] are pilot subcarriers, and carried values are +1/-1; and the rest is a data subcarrier. In 802.11be, the pilot subcarrier shown herein is the second pilot subcarrier shown in this embodiment of this application, the guard subcarrier shown herein is a guard subcarrier corresponding to the second pilot subcarrier, and the data subcarrier shown herein is a data subcarrier corresponding to the second pilot subcarrier.

For the relationship between the pilot subcarrier in the high frequency channel and the data subcarrier in the low frequency channel, the relationship between the pilot subcarrier in the high frequency channel and the pilot subcarrier in the low frequency channel, and the relationship between the pilot subcarrier in the high frequency channel and the guard subcarrier in the low frequency channel, refer to the descriptions in the example 1 to the example 6. Details are not described herein again. A location of each first pilot subcarrier shown in Table 13 may be determined based on a subcarrier spacing of the first high frequency channel and the index value of the first pilot subcarrier. The first pilot subcarriers shown in Table 14 may be understood as reconfigured pilot subcarriers.

For example, Table 13 and Table 14 show the index values of the first pilot subcarriers and the index values of the first guard subcarriers, that are provided in this embodiment of this application.

**Table 13**

| Quantity of added pilot subcarriers | Index values of the first pilot subcarriers | Index values of the first guard subcarriers |
|---|---|---|
| 2 | [-501, -468, -400, -334, -266, -220, -152, -86, -18, 18, 86, 152, 220, 266, 334, 400, 468, 501] | [-512:-502, 502:511] |
| 4 | [-502, -501, -468, -400, -334, -266, -220, -152, -86, -18, 18, 86, 152, 220, 266, 334, 400, 468, 501, 502] | [-512:-503, 503:511] |
| 6 | [-503, -502, -501, -468, -400, -334, -266, -220, - 152, -86, -18, 18, 86, 152, 220, 266, 334, 400, 468, 501, 502, 503] | [-512:-504, 504:511] |
| 8 | [-504, -503, -502, -501, -468, -400, -334, -266, - 220, -152, -86, -18, 18, 86, 152, 220, 266, 334, 400, 468, 501, 502, 503, 504] | [-512:-505, 505:511] |
| 10 | [-505,-504,-503,-502,-501,-468,-400,-334,-266, -220, -152, -86, 18, 18, 86, 152, 220, 266, 334, 400, 468, 501, 502, 503, 504, 505] | [-512:-506, 506:511] |
| 12 | [-506, -505, -504, -503, -502, -501, -468, -400, - 334, -266, -220, -152, -86, -18, 18, 86, 152, 220, 266, 334, 400, 468, 501, 502, 503, 504, 505, 506] | [-512:-507, 507:511] |
| 14 | [-507, -506, -505, -504, -503, -502, -501, -468, - 400, -334, -266, -220, -152, -86, -18, 18, 86, 152, 220, 266, 334, 400, 468, 501, 502, 503, 504, 505, 506, 507] | [-512:-508, 508:511] |
| 16 | [-508, -507, -506, -505, -504, -503, -502, -501, - 468, -400, -334, -266, -220, -152, -86, -18, 18, 86, 152, 220, 266, 334, 400, 468, 501, 502, 503, 504, 505, 506, 507, 508] | [-512:-509, 509:511] |
| 18 | [-509, -508, -507, -506, -505, -504, -503, -502, - 501, -468, -400, -334, -266, -220, -152, -86, -18, 18, 86, 152, 220, 266, 334, 400, 468, 501, 502, 503, 504, 505, 506, 507, 508, 509] | [-512:-510, 510:511] |
| 20 | [-510, -509, -508, -507, -506, -505, -504, -503, - 502, -501, -468, -400, -334, -266, -220, -152, -86, - 18, 18, 86, 152, 220, 266, 334, 400, 468, 501, 502, 503, 504, 505, 506, 507, 508, 509, 510] | [-512:-511, 511] |
| 22 | [-511,-510,-509,-508,-507,-506,-505,-504,-503, -502, -501, -468, -400, -334, -266, -220, -152, -86, -18, 18, 86, 152, 220, 266, 334, 400, 468, 501, 502, 503, 504, 505, 506, 507, 508, 509, 510, 511] | [-512] |

It may be understood that all remaining index values other than the index values of the first pilot subcarriers shown in Table 13, the index values of the first guard subcarriers shown in Table 13, and the index values of the direct current subcarriers (the index values are -2, -1, 0, 1, and 2) in the index values -512:511 are index values of the first data subcarriers.

**Table 14**

| Quantity of added pilot subcarriers | Index values of the first pilot subcarriers | Index values of the first guard subcarriers |
|---|---|---|
| 2 | [-476, -420, -364, -308, -252, -196, -140, -84, -28, 28, 84, 140, 196, 252, 308, 364, 420, 476] | [-512:-502, 502:511] |
| 4 | [-475, -425, -375, -325, -275, -225, -175, -125, -75, -25, 25, 75, 125, 175, 225, 275, 325, 375, 425, 475] | [-512:-503, 503:511] |
| 6 | [-462, -418, -374, -330, -286, -242, -198, -154, - 110, -66, -22, 22, 66, 110, 154, 198, 242, 286, 330, 374, 418, 462] | [-512:-504, 504:511] |
| 8 | [-483, -441, -399, -357, -315, -273, -231, -189, - 147, -105, -63, -21, 21, 63, 105, 147, 189, 231, 273, 315, 357, 399, 441, 483] | [-512:-505, 505:511] |
| 10 | [-475, -437, -399, -361, -323, -285, -247, -209, - 171, -133, -95, -57, -19, 19, 57, 95, 133, 171, 209, 247, 285, 323, 361, 399, 437, 475] | [-512:-506, 506:511] |
| 12 | [-486, -450, -414, -378, -342, -306, -270, -234, - 198, -162, -126, -90, -54, -18, 18, 54, 90, 126, 162, 198, 234, 270, 306, 342, 378, 414, 450, 486] | [-512:-507, 507:511] |
| 14 | [-478, -445, -412, -379, -346, -313, -280, -247, - 214, -181, -148, -115, -82, -49, -16, 16, 49, 82, 115, 148, 181, 214, 247, 280, 313, 346, 379, 412, 445, 478 | [-512:-508, 508:511] |
| 16 | [-480, -449, -418, -387, -356, -325, -294, -263, - 232, -201, -170, -139, -108, -77, -46, -15, 15, 46, 77, 108, 139, 170, 201, 232, 263, 294, 325, 356, 387, 418, 449, 480] | [-512:-509, 509:511] |
| 18 | [-495, -465, -435, -405, -375, -345, -315, -285, - 255, -225, -195, -165, -135, -105, -75, -45, -15, 15, 45, 75, 105, 135, 165, 195, 225, 255, 285, 315, 345, 375, 405, 435, 465, 495] | [-512:-510, 510:511] |
| 20 | [-490, -462, -434, -406, -378, -350, -322, -294, - 266, -238, -210, -182, -154, -126, 98, -70, -42, -14, 14, 42, 70, 98, 126, 154, 182, 210, 238, 266, 294, 322, 350, 378, 406, 434, 462, 490] | [-512:-511, 511] |
| 22 | [-481, -455, -429, -403, -377, -351, -325, -299, - 273,-247,-221,-195,-169,-143,-117,-91,-65,-39, -13, 13, 39, 65, 91, 117, 143, 169, 195, 221, 247, 273, 299, 325, 351, 377, 403, 429, 455, 481] | [-512] |

It may be understood that all remaining index values other than the index values of the first pilot subcarriers shown in Table 14, the index values of the first guard subcarriers shown in Table 14, and the index values of the direct current subcarriers (the index values are -2, -1, 0, 1, and 2) in the index values -512:511 are the index values of the first data subcarriers.

For the example 7 shown in this embodiment of this application, the bandwidth of the first low frequency channel may be 80 MHz, and the bandwidth of the first high frequency channel may be either 4320 MHz or 8640 MHz.

It may be understood that for descriptions of 20 MHz and 40 MHz in the 802.11be protocol, refer to the related descriptions of 20 MHz (as shown in Table 7 and Table 8) and 40 MHz (as shown in Table 9 and Table 10) in the 802.11ax protocol. Details are not described herein again. The bandwidths in the examples shown above are merely examples, and should not be understood as a limitation on embodiments of this application. For a part that is not described in detail in the example shown above, refer to another example.

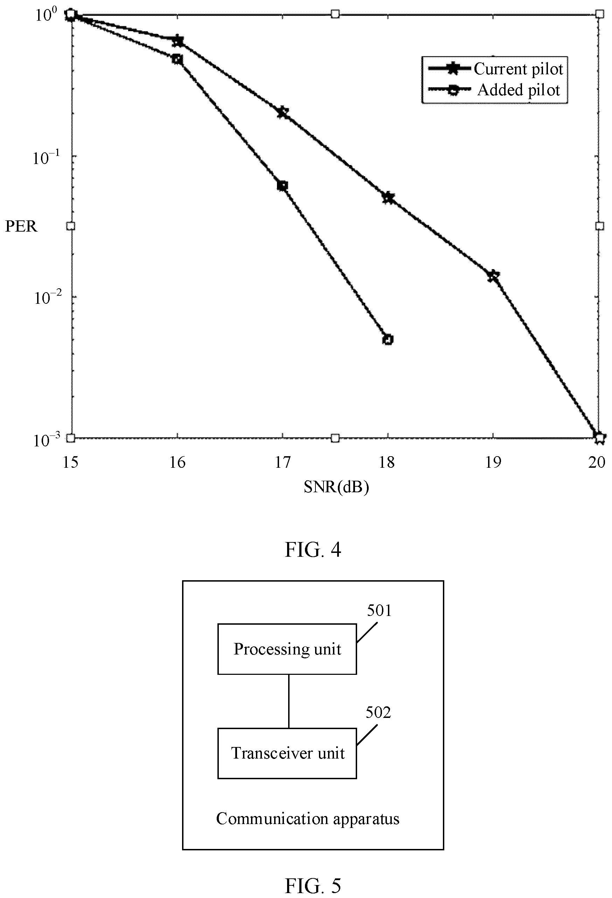

FIG. 4 is a diagram of an emulation result according to this embodiment of this application. In the diagram of emulation shown in FIG. 4, a horizontal coordinate represents a received signal-to-noise ratio, and a vertical coordinate represents a packet error rate. The emulation is shown based on the last row shown in Table 5 as an example. To be specific, when index values of current pilot subcarriers (current pilots) shown in FIG. 4 are [-103, -75, -39, -11, 11, 39, 75, 103], index values of added pilot subcarriers (added pilots) shown in FIG. 4 are [-128, -127, -126, -125, -124, -123, -103, -75, -39, -11, 11, 39, 75, 103, 123, 124, 125, 126, 127]. It can be learned from FIG. 4 that, for a same packet error rate, the PPDU generated by using the first pilot subcarrier provided in this embodiment of this application has a low requirement for an external environment. When the PER reaches 10%, the received signal-to-noise ratio required in this solution decreases by 1 dB.

In this embodiment of this application, for the example 1 to the example 7 shown above, when the second guard subcarrier is used as the first pilot subcarrier, for a signal (signal, SIG) part and a data part that are in the PPDU, the guard subcarrier selected as the supplementary first pilot subcarrier no longer carries 0, and carries +1 or -1.

The SIG part in the PPDU may vary with different frame structures. For example, for a high throughput (high throughput, HT) PPDU, the SIG part may be HT-SIG. For a very high throughput (very high throughput, VHT) PPDU, the SIG part may be VHT-SIG-A or VHT-SIG-B. For a high efficiency (high efficiency, HE) PPDU, the SIG part may be HE-SIG-A or HE-SIG-B. For an extremely high throughput (extremely high throughput, EHT) PPDU, the SIG part may be EHT-SIG. It may be understood that the PPDU enumerated herein is merely an example. With development of standards, a PPDU of another structure may appear in the future, and pilot subcarriers used in an L-STF part, an L-LTF part, a SIG part, and a data part in the PPDU also fall within the protection scope of this application.

In this embodiment of this application, the PPDU includes a legacy long training field (legacy long training field, L-LTF), and may further include any one of the following: HT-LTF, VHT-LTF, HE-LTF, and EHT-LTF. An LTF sequence may be classified into a 1x sequence, a 2x sequence, and a 4x sequence. The LTF 1x sequence indicates that there is at least three zeros between two non-zero elements. The LTF 2x sequence indicates that there is at least one zero between two non-zero elements. The LTF 4x sequence indicates that there are consecutive non-zero elements, non-zero elements in the LTF 4x sequence are the densest, and therefore, channel estimation is the most accurate. An OFDM symbol occupied by the LTF is generated based on the LTF sequence. Generally, a value carried by a pilot subcarrier is +1 or -1. In this embodiment of this application, when the OFDM symbol occupied by the LTF is generated by using the first pilot subcarrier, a value carried by the first pilot subcarrier may be determined based on a peak-to-average power ratio (peak to average power ratio, PAPR). For example, in the first row of Table 5 in the example 3 shown above, the subcarrier whose index value is -123 is the first pilot subcarrier. In the 802.11ac protocol, a value carried by the subcarrier whose index value is -123 is 0. However, in this embodiment of this application, a value carried by the subcarrier whose index value is -123 may be 1. For example, in the example 3 shown above, the subcarriers whose index values are - 125, -124, -123, 123, and 124 are the first pilot subcarriers. In the 802.11ac protocol, values carried by the subcarriers whose index values are -125, -124, -123, 123, and 124 are 0. However, in this embodiment of this application, values carried by the subcarriers whose index values are - 125, -124, -123, 123, and 124 may be successively [1 -1 -1 -1 -1]. In other words, the transmit end may adaptively modify, based on the PAPR, a value of a sequence carried by the LTF, for example, may modify values of some sequences carried by the LTF.

The PAPR may be referred to as a peak-to-average ratio for short, is a ratio of an instantaneous power peak of a signal to an average signal power for a signal sequence, and may be represented by the following formula:

$$\text{PAPR} = 10 \cdot \log_{10}\left(\frac{\max(X_i^2)}{mean(X_i^2)}\right)$$

$X_i$ represents a time domain discrete value of a signal in the signal sequence; $\max(X_i^2)$ represents a maximum value of a square of the time domain discrete value in the signal sequence, namely, the instantaneous power peak of the signal; and $mean(X_i^2)$ represents an average value of squares of time domain discrete values, namely, the average signal power.

It is well known that a frequency domain equalization technology is used for OFDM. Therefore, accuracy of channel estimation has great impact on communication performance. However, an OFDM system has a disadvantage of a high PAPR, and especially in a high bandwidth, more subcarriers lead to a more serious PAPR. The high PAPR leads to nonlinear signal distortion and degrades system performance. Therefore, to make channel estimation more accurate, a low PAPR is an important indicator for an LTF sequence design. Because signal sending manners (a P matrix and an R matrix) of pilot subcarriers and data subcarriers are different, the pilot subcarriers are different in location and quantity, resulting in different PAPRs of LTFs. However, the first pilot subcarrier provided in this embodiment of this application is used. This can ensure that the receive end has sufficient pilots for the phase offset and/or the frequency offset, and can ensure a low PAPR of the LTF.

Generally, a guard band formed by guard subcarriers is usually reserved for the filter as a transition band bandwidth. When indicators such as outband suppression and in-band flatness are determined, the transition band bandwidth affects an order of the filter, and a specific design of the transition band bandwidth is determined based on implementation. In this embodiment of this application, because some guard subcarriers are converted into first pilot subcarriers for use, the remaining guard band may be insufficient as the transition band bandwidth. Optionally, the transmit end may adjust a sample rate (sample rate) of a signal, that is, a signal bandwidth, so that the signal bandwidth is less than the channel bandwidth. Optionally, a sample rate of a high frequency band signal sent by the transmit end is less than the sample rate of the channel bandwidth, to ensure a sufficient guard bandwidth. For example, a guard subcarrier that is not converted into a pilot subcarrier and a difference part obtained by subtracting the signal bandwidth from the channel bandwidth are used together as the guard bandwidth. For another example, a difference obtained by subtracting the signal bandwidth from the channel bandwidth is used as the guard bandwidth. Certainly, the foregoing method for adjusting the sample rate is merely an example. In this embodiment of this application, when the transmit end sends the PPDU on the first high frequency channel, the signal bandwidth of the PPDU is less than the bandwidth of the first high frequency channel. For example, a difference between the signal bandwidth and the bandwidth of the first high frequency channel is sufficient to be reserved as the guard bandwidth. In this case, the transmit end may not adjust the sample rate according to the foregoing method.

OFDM is a basic transmission manner of current wireless communication, and is widely applied to wireless communication systems such as LTE, WiMAX, and Wi-Fi. In addition, OFDM is further applied to fixed network transmission, for example, transmission through an optical fiber, a copper stranded cable, and a cable. A basic principle of OFDM is to minimize a subcarrier spacing within an allowable range based on subcarrier orthogonality. This can ensure that a plurality of parallel paths that do not interfere with each other are formed, and can improve frequency utilization efficiency of the system. Further, because OFDM has the foregoing characteristics, if subcarriers in OFDM that do not interfere with each other are allocated to a plurality of users, multi-user access or data transmission can be implemented by using OFDM. This is orthogonal frequency division multiple access (orthogonal frequency division multiple access, OFDMA). OFDMA can be used to implement multi-user data concurrent transmission, and is an effective way to improve data transmission concurrency. A resource unit (resource unit, RU) is defined in the 802.11ax protocol, and a multi-resource unit (multiple RU, MRU) is further defined in the 802.11be protocol, and is formed by combining a plurality of fixedly combined RUs. An RU less than 242-tone is referred to as a small (small) RU, and an RU greater than or equal to 242-tone is referred to as a large (large) RU. Combinations supported by the large RU are different for OFDMA transmission and non-OFDMA transmission, one type of 996+484+242-tone RU is additionally supported for non-OFDMA transmission, and other supported combinations are the same. The other combinations shown herein may include combinations supported by the large RU, for example, 996+484 and 2*996+484, that is, combinations supported for both OFDMA and non-OFDMA. For distribution of RUs or MRUs in different bandwidths, refer to a related standard or protocol. Details are not described herein again. For example, the small RU may include a 26-tone RU, a 52-tone RU, or a 106-tone RU.

In a possible implementation, the transmit end may send a signal in a largest resource unit (resource unit, RU) in a corresponding bandwidth. For example, in a 20 MHz bandwidth in 802.11be (refer to Table 7 and Table 8), the transmit end may send a signal on a 242-tone RU. For another example, in a 40 MHz bandwidth in 802.11be (refer to Table 9 and Table 10), it is considered that sending is performed in a 484-tone RU. This implementation is applicable to a solution in which a subcarrier spacing of a low frequency band signal is extended to obtain a high frequency band signal and a quantity of pilots remains unchanged, and is also applicable to a solution in which a subcarrier spacing of a low frequency band signal is extended to obtain a high frequency band signal and a quantity of pilots is increased, for example, the example 1 to the example 7 shown above.

In another possible implementation, the transmit end may send the PPDU to one receive end in a plurality of small RUs (that is, send a signal to one user in the plurality of small RUs). That is, the transmit end may replace sending one largest RU in the foregoing implementation with sending the plurality of small RUs. For example, for the 20 MHz bandwidth, a 242-tone RU may not be sent, and the quantity of pilot subcarriers is 8; and nine 26-tone RUs are sent, and the quantity of pilot subcarriers is 18; or four 52-tone RUs and one 26-tone RU are sent, and the quantity of pilot subcarriers is 18; or two 106-tone RUs and one 26-tone RU are sent, and the quantity of pilot subcarriers is 10. Because a sum of quantities of pilots of the plurality of small RUs is greater than a quantity of pilots of the largest RU, in this implementation, the quantity of pilot subcarriers may also be increased.

It may be understood that, when a bandwidth is 160 MHz or 80 MHz+80 MHz, the entire bandwidth may be considered as two replications of subcarrier distribution of 80 MHz. The entire bandwidth may include an entire 2*996-tone RU, or may include various combinations of a 26-tone RU, a 52-tone RU, a 106-tone RU, a 242-tone RU, a 484-tone RU, and a 996-tone RU. When a bandwidth is 320 MHz or 160 MHz+160 MHz, the entire bandwidth may be considered as four replications of subcarrier distribution of 80 MHz. Combinations of the plurality of small RUs in a 160 MHz or 320 MHz bandwidth are not enumerated one by one herein. The example 1 to the example 7 shown above do not show a change to the pilot subcarrier in 160 MHz and 320 MHz bandwidths of the low frequency band signal. Certainly, the first pilot subcarrier, the first guard subcarrier, and/or the like may be alternatively designed based on 160 MHz or 80 MHz+80 MHz. Details are not described in embodiments of this application.

The following describes communication apparatuses provided in embodiments of this application.

In this application, the communication apparatus is divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely logical function division. During actual implementation, another division manner may be used. The following describes in detail communication apparatuses in embodiments of this application with reference to FIG. 5 to FIG. 7.

FIG. 5 is a diagram of a structure of a communication apparatus according to an embodiment of this application.

As shown in FIG. 5, the communication apparatus includes a processing unit 501 and a transceiver unit 502.

In some embodiments of this application, the communication apparatus may be the transmit end or the chip shown above, and the chip may be disposed in the transmit end. In other words, the communication apparatus may be configured to perform a step, a function, or the like performed by the transmit end in the method embodiment.

The processing unit 501 is configured to generate a PPDU, and the transceiver unit 502 is configured to output the PPDU.

It may be understood that specific descriptions of the transceiver unit and the processing unit that are described in embodiments of this application are merely examples. For specific functions, performed steps, or the like of the transceiver unit and the processing unit, refer to the foregoing method embodiment. Details are not described herein. For example, the processing unit 501 may be configured to perform step 201 shown in FIG. 2. The transceiver unit 502 may be configured to perform a sending step in step 202 shown in FIG. 2.

FIG. 5 is reused. In some other embodiments of this application, the communication apparatus may be the receive end or the chip shown above, and the chip may be disposed in the receive end. In other words, the communication apparatus may be configured to perform a step, a function, or the like performed by the receive end in the method embodiment.

For example, the transceiver unit 502 is configured to input a PPDU, and the processing unit 501 is configured to process the PPDU.

For example, the processing unit 501 is specifically configured to: obtain, based on an index value of a first pilot subcarrier, a pilot signal in the PPDU on the first pilot subcarrier corresponding to the index value; and perform processing based on the pilot signal. For another example, the processing unit 501 may be configured to perform at least one of the following: performing phase offset estimation and/or compensation based on the pilot signal, and performing frequency offset estimation and/or compensation based on the pilot signal.

It may be understood that specific descriptions of the transceiver unit and the processing unit that are described in embodiments of this application are merely examples. For specific functions, performed steps, or the like of the transceiver unit and the processing unit, refer to the foregoing method embodiment. Details are not described herein. For example, the transceiver unit 502 may be further configured to perform a receiving step in step 202 shown in FIG. 2. The processing unit 501 may be further configured to perform step 203 shown in FIG. 2.

In the foregoing embodiment of this application, for descriptions of the PPDU, the first pilot subcarrier, the second pilot subcarrier, the first guard subcarrier, the second guard subcarrier, the first data subcarrier, the second data subcarrier, and the like, refer to the descriptions in the foregoing method embodiment. Details are not described herein again.

It may be understood that the foregoing division manner is merely an example. A division manner for the transmit end (or the chip disposed at the transmit end) and the receive end (or the chip disposed at the receive end) may be further shown as follows: The transmit end may include a generation unit and a sending unit. The receive end may include a receiving unit and a processing unit. The processing unit may include at least one of a pilot subunit, a channel estimation subunit, and a time synchronization subunit, or the like. Details are not enumerated one by one herein. Optionally, the transmit end and the receive end shown above each may further include a storage unit, and the storage unit may be configured to store the index value shown above. Alternatively, the storage unit may be configured to store at least one of the following: an index value of the first pilot subcarrier, an index value of the first guard subcarrier, and an index value of the first data subcarrier.

The foregoing describes the first communication apparatus and the second communication apparatus in embodiments of this application. The following describes possible product forms of the first communication apparatus and the second communication apparatus. It should be understood that any form of product having a function of the first communication apparatus in FIG. 5 or any form of product having a function of the second communication apparatus in FIG. 5 falls within the protection scope of embodiments of this application. It should be further understood that the following description is merely an example, and the product forms of the first communication apparatus and the second communication apparatus in embodiments of this application are not limited thereto.

In a possible implementation, in the communication apparatus shown in FIG. 5, the processing unit 501 may be one or more processors. The transceiver unit 502 may be a transceiver, or the transceiver unit 502 may be a sending unit and a receiving unit. The sending unit may be a transmitter, and the receiving unit may be a receiver. The sending unit and the receiving unit are integrated into one device, for example, a transceiver. In this embodiment of this application, the processor and the transceiver may be coupled, or the like. A manner of connecting the processor and the transceiver is not limited in embodiments of this application.

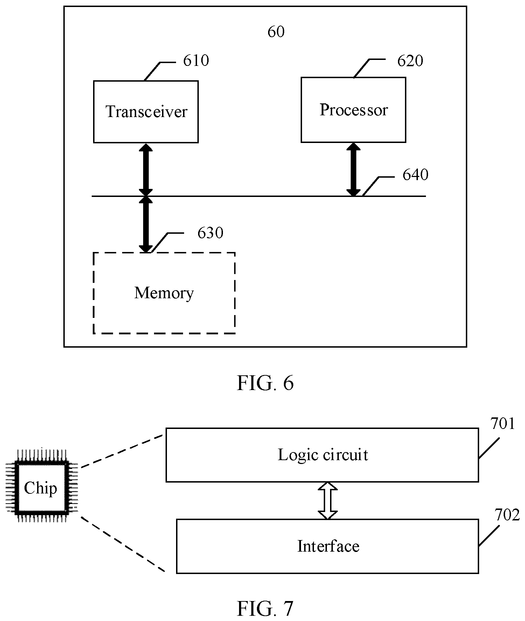

As shown in FIG. 6, a communication apparatus 60 includes one or more processors 620 and a transceiver 610.

For example, when the communication apparatus is configured to perform the step, method, or function performed by the transmit end, the processor 620 is configured to generate a PPDU, and the transceiver 610 is configured to send the PPDU.

For example, when the communication apparatus is configured to perform the step, method, or function performed by the receive end, the transceiver 610 is configured to receive the PPDU from the transmit end, and the processor 620 is configured to perform processing based on M sequences carried in the PPDU.

In this embodiment of this application, for descriptions of the PPDU, the first pilot subcarrier, the second pilot subcarrier, the first guard subcarrier, the second guard subcarrier, the first data subcarrier, the second data subcarrier, and the like, refer to the descriptions in the foregoing method embodiment. Details are not described herein again.

It may be understood that for specific descriptions of the processor and the transceiver, refer to descriptions of the processing unit and the transceiver unit shown in FIG. 5. Details are not described herein again.

In each implementation of the communication apparatus shown in FIG. 6, the transceiver may include a receiver machine and a transmitter machine. The receiver machine is configured to perform a receiving function (or an operation), and the transmitter machine is configured to perform a transmitting function (or an operation). In addition, the transceiver is configured to communicate with another device/apparatus through a transmission medium.

Optionally, the communication apparatus 60 may further include one or more memories 630, configured to store program instructions, data, and/or the like. The memory 630 is coupled to the processor 620. Coupling in embodiments of this application is indirect coupling or a communication connection between apparatuses, units, or modules, may be in an electrical form, a mechanical form, or another form, and is used for information exchange between the apparatuses, the units, or the modules. The processor 620 may cooperate with the memory 630. The processor 620 may execute the program instructions stored in the memory 630. Optionally, at least one of the one or more memories may be included in the processor. For example, the memory may be configured to store each index value shown above. For example, the memory may be configured to store at least one of the following: an index value of the first pilot subcarrier, an index value of the first guard subcarrier, and an index value of the first data subcarrier.

A specific connection medium between the transceiver 610, the processor 620, and the memory 630 is not limited in embodiments of this application. In this embodiment of this application, in FIG. 6, the memory 630, the processor 620, and the transceiver 610 are connected to each other through a bus 640. The bus is represented by using a thick line in FIG. 6. A manner of connection between other components is merely described as an example, and is not limited thereto. The bus may be classified into an address bus, a data bus, a control bus, and the like. For ease of representation, only one thick line is used for representing the bus in FIG. 6, but this does not mean that there is only one bus or only one type of bus.

In this embodiment of this application, the processor may be a general-purpose processor, a digital signal processor, an application-specific integrated circuit, a field-programmable gate array or another programmable logic device, a discrete gate or transistor logic device, a discrete hardware component, or the like, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed and accomplished by a hardware processor, or may be performed and accomplished by using a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus described in this application), but is not limited thereto. The memory in this embodiment of this application may alternatively be a circuit or any other apparatus that can implement a storage function, and is configured to store the program instructions and/or the data.

For example, the processor 620 is mainly configured to process a communication protocol and communication data, control the entire communication apparatus, execute a software program, and process data of the software program. The memory 630 is mainly configured to store the software program and the data. The transceiver 610 may include a control circuit and an antenna. The control circuit is mainly configured to: perform conversion between a baseband signal and a radio frequency signal, and process the radio frequency signal. The antenna is mainly configured to receive or send a radio frequency signal in a form of an electromagnetic wave. An input/output apparatus, for example, a touchscreen, a display, or a keyboard, is mainly configured to receive data input by a user and output data to the user.

After the communication apparatus is powered on, the processor 620 may read the software program in the memory 630, interpret and execute instructions of the software program, and process data of the software program. When data needs to be sent wirelessly, the processor 620 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 620. The processor 620 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may further have more components and the like than those in FIG. 6. This is not limited in this embodiment of this application. The methods performed by the processor and the transceiver are merely examples. For specific steps performed by the processor and the transceiver, refer to the methods described above.

In another possible implementation, in the communication apparatus shown in FIG. 5, the processing unit 501 may be one or more logic circuits, and the transceiver unit 502 may be an input/output interface, which is also referred to as a communication interface, an interface circuit, an interface, or the like. Alternatively, the transceiver unit 502 may be a sending unit and a receiving unit. The sending unit may be an output interface, and the receiving unit may be an input interface. Alternatively, the sending unit and the receiving unit are integrated into one unit, for example, an input/output interface. As shown in FIG. 7, the communication apparatus as shown in FIG. 7 includes a logic circuit 701 and an interface 702. In other words, the processing unit 501 may be implemented through the logic circuit 701, and the transceiver unit 502 may be implemented through the interface 702. The logic circuit 701 may be a chip, a processing circuit, an integrated circuit, a system on chip (system on chip, SoC), or the like. The interface 702 may be a communication interface, an input/output interface, a pin, or the like. For example, FIG. 7 is an example in which the communication apparatus is a chip. The chip includes the logic circuit 701 and the interface 702.

In this embodiment of this application, the logic circuit and the interface may be coupled to each other. A specific manner of connection between the logic circuit and the interface is not limited in embodiments of this application.

For example, when the communication apparatus is configured to perform the method, function, or step performed by the transmit end, the logic circuit 701 is configured to generate a PPDU. The interface 702 is configured to output the PPDU.

For example, when the communication apparatus is configured to perform the method, function, or step performed by the receive end, the interface 702 is configured to input a PPDU, and the logic circuit 701 is configured to process the PPDU.

Optionally, the chip may further include a memory, and the memory may be configured to store each index value shown above. For example, the memory may be configured to store at least one of the following: an index value of a first pilot subcarrier, an index value of a first data subcarrier, and an index value of a first guard subcarrier. Certainly, the memory may alternatively be disposed outside the chip. For example, the chip may obtain an index value from a memory connected to the chip.

It may be understood that the communication apparatus described in embodiments of this application may implement the method provided in embodiments of this application in a form of hardware, or may implement the method provided in embodiments of this application in a form of software. This is not limited in embodiments of this application.

In this embodiment of this application, for descriptions of the PPDU, the first pilot subcarrier, the second pilot subcarrier, the first guard subcarrier, the second guard subcarrier, the first data subcarrier, the second data subcarrier, and the like, refer to the descriptions in the foregoing method embodiment. Details are not described herein again.

For specific implementations of the embodiment shown in FIG. 7, refer to the foregoing embodiments. Details are not described herein again.

An embodiment of this application further provides a wireless communication system. The wireless communication system includes a transmit end and a receive end. The transmit end and the receive end may be configured to perform the method in any embodiment (for example, FIG. 2).

In addition, this application further provides a computer program. The computer program is used to implement an operation and/or processing that are/is performed by the transmit end in the method provided in this application.

This application further provides a computer program. The computer program is used to implement an operation and/or processing that are/is performed by the receive end in the method provided in this application.

This application further provides a computer-readable storage medium. The computer-readable storage medium stores computer code. When the computer code is run on a computer, the computer is enabled to perform an operation and/or processing that are/is performed by the transmit end in the method provided in this application.

This application further provides a computer-readable storage medium. The computer-readable storage medium stores computer code. When the computer code is run on a computer, the computer is enabled to perform an operation and/or processing that are/is performed by the receive end in the method provided in this application.

This application further provides a computer program product. The computer program product includes computer code or a computer program. When the computer code or the computer program is run on a computer, an operation and/or processing that are/is performed by the transmit end in the method provided in this application are/is performed.

This application further provides a computer program product. The computer program product includes computer code or a computer program. When the computer code or the computer program is run on a computer, an operation and/or processing that are/is performed by the receive end in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located at one location, or may be distributed on a plurality of network units. Some or all of the units may be selected based on an actual requirement to achieve the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A physical layer protocol data unit PPDU-based communication method, wherein the method comprises:

   generating the PPDU; and
   sending the PPDU on a first high frequency channel, wherein the first high frequency channel comprises a first pilot subcarrier and a first data subcarrier, a discrete Fourier transform DFT size corresponding to the first high frequency channel is the same as a DFT size corresponding to a first low frequency channel, a quantity of first pilot subcarriers is greater than a quantity of second pilot subcarriers in the first low frequency channel, and a quantity of first data subcarriers is equal to a quantity of second data subcarriers in the first low frequency channel.

2. A physical layer protocol data unit PPDU-based communication method, wherein the method comprises:

   receiving the PPDU on a first high frequency channel, wherein the first high frequency channel comprises a first pilot subcarrier and a first data subcarrier, a discrete Fourier transform DFT size corresponding to the first high frequency channel is the same as a DFT size corresponding to a first low frequency channel, a quantity of first pilot subcarriers is greater than a quantity of second pilot subcarriers in the first low frequency channel, and a quantity of first data subcarriers is equal to a quantity of second data subcarriers in the first low frequency channel; and
   processing the PPDU.

3. The method according to claim 2, wherein the processing the PPDU comprises:

   obtaining, based on an index value of the first pilot subcarrier, a pilot signal in the PPDU on the first pilot subcarrier corresponding to the index value; and
   performing processing based on the pilot signal.

4. The method according to claim 3, wherein the performing processing based on the pilot signal comprises at least one of the following:

performing phase offset estimation and/or compensation based on the pilot signal; and
performing frequency offset estimation and/or compensation based on the pilot signal.

5. The method according to any one of claims 1 to 4, wherein the first pilot subcarrier is obtained by mapping, to the first high frequency channel, a second pilot subcarrier and a second guard subcarrier that are in the first low frequency channel.

6. The method according to claim 5, wherein the index value of the first pilot subcarrier comprises at least one of the following: an index value of the second guard subcarrier and an index value of the second pilot subcarrier.

7. The method according to any one of claims 1 to 6, wherein index values of the first pilot subcarriers comprise at least one of the following:

[-29, -21, -7, 7, 21];
[-29, -21, -7, 7, 21, 29];
[-30, -29, -21, -7, 7, 21, 29];
[-30, -29, -21, -7, 7, 21, 29, 30];
[-31, -30, -29, -21, -7, 7, 21, 29, 30];
[-31, -30, -29, -21, -7, 7, 21, 29, 30, 31]; and
[-32, -31, -30, -29, -21, -7, 7, 21, 29, 30, 31], wherein
[-21, -7, 7, 21] are the same as index values of the second pilot subcarriers, and [-32, -31, - 30, -29, 29, 30, 31] are the same as index values of the second guard subcarriers.

8. The method according to any one of claims 1 to 6, wherein index values of the first pilot subcarriers comprise at least one of the following:

[-59, -53, -25, -11, 11, 25, 53];
[-59, -53, -25, -11, 11, 25, 53, 59];
[-60, -59, -53, -25, -11, 11, 25, 53, 59];
[-60, -59, -53, -25, -11, 11, 25, 53, 59, 60];
[-61, -60, -59, -53, -25, -11, 11, 25, 53, 59, 60];
[-61, -60, -59, -53, -25, -11, 11, 25, 53, 59, 60, 61];
[-62, -61, -60, -59, -53, -25, -11, 11, 25, 53, 59, 60, 61];
[-62, -61, -60, -59, -53, -25, -11, 11, 25, 53, 59, 60, 61, 62];
[-63, -62, -61, -60, -59, -53, -25, -11, 11, 25, 53, 59, 60, 61, 62];
[-63, -62, -61, -60, -59, -53, -25, -11, 11, 25, 53, 59, 60, 61, 62, 63]; and
[-64, -63, -62, -61, -60, -59, -53, -25, -11, 11, 25, 53, 59, 60, 61, 62, 63], wherein
[-53, -25, -11, 11, 25, 53] are the same as index values of the second pilot subcarriers, and [-64, -63, -62, -61, -60, -59, 59, 60, 61, 62, 63] are the same as index values of the second guard subcarriers.

9. The method according to any one of claims 1 to 6, wherein index values of the first pilot subcarriers comprise at least one of the following:

[-123, -103, -75, -39, -11, 11, 39, 75, 103];
[-123, -103, -75, -39, -11, 11, 39, 75, 103, 123];
[-124, -123, -103, -75, -39, -11, 11, 39, 75, 103, 123];
[-124, -123, -103, -75, -39, -11, 11, 39, 75, 103, 123, 124];
[-125, -124, -123, -103, -75, -39, -11, 11, 39, 75, 103, 123, 124];
[-125, -124, -123, -103, -75, -39, -11, 11, 39, 75, 103, 123, 124, 125];
[-126, -125, -124, -123, -103, -75, -39, -11, 11, 39, 75, 103, 123, 124, 125];
[-126, -125, -124, -123, -103, -75, -39, -11, 11, 39, 75, 103, 123, 124, 125, 126];
[-127, -126, -125, -124, -123, -103, -75, -39, -11, 11, 39, 75, 103, 123, 124, 125, 126];
[-127, -126, -125, -124, -123, -103, -75, -39, -11, 11, 39, 75, 103, 123, 124, 125, 126, 127]; and
[-128, -127, -126, -125, -124, -123, -103, -75, -39, -11, 11, 39, 75, 103, 123, 124, 125, 126, 127], wherein
[-103, -75, -39, -11, 11, 39, 75, 103] are the same as index values of the second pilot subcarriers, and [-128, -127, -126, -125, -124, -123, 123, 124, 125, 126, 127] are the same as index values of the second guard subcarriers.

10. The method according to any one of claims 1 to 6, wherein index values of the first pilot subcarriers comprise at least one of the following:

[-123, -116, -90, -48, -22, 22, 48, 90, 116];
[-123, -116, -90, -48, -22, 22, 48, 90, 116, 123];
[-124, -123, -116, -90, -48, -22, 22, 48, 90, 116, 123];
[-124, -123, -116, -90, -48, -22, 22, 48, 90, 116, 123, 124];
[-125, -124, -123, -116, -90, -48, -22, 22, 48, 90, 116, 123, 124];
[-125, -124, -123, -116, -90, -48, -22, 22, 48, 90, 116, 123, 124, 125];
[-126, -125, -124, -123, -116, -90, -48, -22, 22, 48, 90, 116, 123, 124, 125];
[-126, -125, -124, -123, -116, -90, -48, -22, 22, 48, 90, 116, 123, 124, 125, 126];
[-127, -126, -125, -124, -123, -116, -90, -48, -22, 22, 48, 90, 116, 123, 124, 125, 126];
[-127, -126, -125, -124, -123, -116, -90, -48, -22, 22, 48, 90, 116, 123, 124, 125, 126, 127]; and
[-128, -127, -126, -125, -124, -123, -116, -90, -48, -22, 22, 48, 90, 116, 123, 124, 125, 126, 127], wherein
[-116, -90, -45, -22, 22, 48, 90, 116] are the same as index values of the second pilot subcarriers, and [-128, -127, -126, -125, -124, -123, 123, 124, 125, 126, 127] are the same as index values of the second guard subcarriers.

11. The method according to any one of claims 1 to 6, wherein index values of the first pilot subcarriers comprise at least one of the following:

[-245, -238, -212, -170, -144, -104, -78, -36, -10, 10, 36, 78, 104, 144, 170, 212, 238, 245];
[-246, -245, -238, -212, -170, -144, -104, -78, -36, -10, 10, 36, 78, 104, 144, 170, 212, 238, 245, 246];
[-247, -246, -245, -238, -212, -170, -144, -104, -78, -36, -10, 10, 36, 78, 104, 144, 170, 212, 238, 245, 246, 247];
[-248, 247, -246, -245, -238, 212, -170, -144, -104, -78, -36, -10, 10, 36, 78, 104, 144, 170, 212, 238, 245, 246, 247, 248];
[-249, -248, -247, -246, -245, -238, -212, -170, -144, -104, -78, -36, -10, 10, 36, 78, 104, 144, 170, 212, 238, 245, 246, 247, 248, 249];
[-250, -249, -248, -247, -246, -245, -238, -212, -170, -144, -104, -78, -36, -10, 10, 36, 78, 104, 144, 170, 212, 238, 245, 246, 247, 248, 249, 250];
[-251, -250, -249, -248, -247, -246, -245, -238, -212, -170, -144, -104, -78, -36, -10, 10, 36, 78, 104, 144, 170, 212, 238, 245, 246, 247, 248, 249, 250, 251];
[-252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252];
[-253, -252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252, 253];
[-254, -253, -252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252, 253, 254]; and
[-255, -254, -253, -252, -251, -250, -249, -248, -247, -246, -245, -238, -212, -170, -144, -104, -78, -36, -10, 10, 36, 78, 104, 144, 170, 212, 238, 245, 246, 247, 248, 249, 250, 251, 252, 253, 254, 255], wherein
[-238, -212, -170, -144, -104, -78, -36, -10, 10, 36, 78, 104, 144, 170, 212, 238] are the same as index values of the second pilot subcarriers, and [-256, -255, -254, -253, -252, -251, - 250, -249, -248, -247, -246, -245, 245, 246, 247, 248, 249, 250, 251, 252, 253, 254, 255] are the same as index values of the second guard subcarriers.

12. The method according to any one of claims 1 to 6, wherein index values of the first pilot subcarriers comprise at least one of the following:

[-501, -468, -400, -334, -266, -226, -158, -92, -24, 24, 92, 158, 226, 266, 334, 400, 468, 501];
[-502, -501, -468, -400, -334, -266, -226, -158, -92, -24, 24, 92, 158, 226, 266, 334, 400, 468, 501, 502];
[-503, -502, -501, -468, -400, -334, -266, -226, -158, -92, -24, 24, 92, 158, 226, 266, 334, 400, 468, 501, 502, 503];
[-504, -503, -502, -501, -468, -400, -334, -266, -226, -158, -92, -24, 24, 92, 158, 226, 266, 334, 400, 468, 501, 502, 503, 504];
[-505, -504, -503, -502, -501, -468, -400, -334, -266, -226, -158, -92, -24, 24, 92, 158, 226, 266, 334, 400, 468, 501, 502, 503, 504, 505];
[-506, -505, -504, -503, -502, -501, -468, -400, -334, -266, -226, -158, -92, -24, 24, 92, 158, 226, 266, 334, 400, 468, 501, 502, 503, 504, 505, 506];
[-507, -506, -505, -504, -503, -502, -501, -468, -400, -334, -266, -226, -158, -92, -24, 24, 92, 158, 226, 266, 334, 400, 468, 501, 502, 503, 504, 505, 506, 507];
[-508, -507, -506, -505, -504, -503, -502, -501, -468, -400, -334, -266, -226, -158, -92, -24, 24, 92, 158, 226, 266, 334, 400, 468, 501, 502, 503, 504, 505, 506, 507, 508];

[-509, -508, -507, -506, -505, -504, -503, -502, -501, -468, -400, -334, -266, -226, -158, -92, -24, 24, 92, 158, 226, 266, 334, 400, 468, 501, 502, 503, 504, 505, 506, 507, 508, 509];

[-510, -509, -508, -507, -506, -505, -504, -503, -502, -501, -468, -400, -334, -266, -226, -158, -92, -24, 24, 92, 158, 226, 266, 334, 400, 468, 501, 502, 503, 504, 505, 506, 507, 508, 509, 510]; and

[-511,-510,-509,-508,-507,-506,-505,-504,-503,-502,-501,-468,-400,-334,-266, -226, -158, -92, -24, 24, 92, 158, 226, 266, 334, 400, 468, 501, 502, 503, 504, 505, 506, 507, 508, 509, 510, 511], wherein

[-468, -400, -334, -266, -226, -158, -92, -24, 24, 92, 158, 226, 266, 334, 400, 468] are the same as index values of the second pilot subcarriers, and [-512, -511, -510, -519, -518, -517, - 516, -515, -514, -513, -512, -510, -509, -508, -507, -506, -505, -504, -503, -502, -501, 501, 502, 503, 504, 505, 506, 507, 508, 509, 510, 511] are the same as index values of the second guard subcarriers.

13. The method according to any one of claims 1 to 6, wherein index values of the first pilot subcarriers comprise at least one of the following:

[-501, -468, -400, -334, -266, -220, -152, -86, -18, 18, 86, 152, 220, 266, 334, 400, 468, 501];

[-502, -501, -468, -400, -334, -266, -220, -152, -86, -18, 18, 86, 152, 220, 266, 334, 400, 468, 501, 502];

[-503, -502, -501, -468, -400, -334, -266, -220, -152, -86, -18, 18, 86, 152, 220, 266, 334, 400, 468, 501, 502, 503];

[-504, -503, -502, -501, -468, -400, -334, -266, -220, -152, -86, -18, 18, 86, 152, 220, 266, 334, 400, 468, 501, 502, 503, 504];

[-505, -504, -503, -502, -501, -468, -400, -334, -266, -220, -152, -86, -18, 18, 86, 152, 220, 266, 334, 400, 468, 501, 502, 503, 504, 505];

[-506, -505, -504, -503, -502, -501, -468, -400, -334, -266, -220, -152, -86, -18, 18, 86, 152, 220, 266, 334, 400, 468, 501, 502, 503, 504, 505, 506];

[-507, -506, -505, -504, -503, -502, -501, -468, -400, -334, -266, -220, -152, -86, -18, 18, 86, 152, 220, 266, 334, 400, 468, 501, 502, 503, 504, 505, 506, 507];

[-508, -507, -506, -505, -504, -503, -502, -501, -468, -400, -334, -266, -220, -152, -86, -18, 18, 86, 152, 220, 266, 334, 400, 468, 501, 502, 503, 504, 505, 506, 507, 508];

[-509, -508, -507, -506, -505, -504, -503, -502, -501, -468, -400, -334, -266, -220, -152, -86, -18, 18, 86, 152, 220, 266, 334, 400, 468, 501, 502, 503, 504, 505, 506, 507, 508, 509];

[-510, -509, -508, -507, -506, -505, -504, -503, -502, -501, -468, -400, -334, -266, -220, -152, -86, -18, 18, 86, 152, 220, 266, 334, 400, 468, 501, 502, 503, 504, 505, 506, 507, 508, 509, 510]; and

[-511, -510, -509, -508, -507, -506, -505, -504, -503, -502, -501, -468, -400, -334, -266, -220, -152, -86, -18, 18, 86, 152, 220, 266, 334, 400, 468, 501, 502, 503, 504, 505, 506, 507, 508, 509, 510, 511], wherein

[-468, -400, -334, -266, -220, -152, -86, -18, 18, 86, 152, 220, 266, 334, 400, 468] are the same as index values of the second pilot subcarriers, and [-512, -511, -510, -519, -518, -517, - 516, -515, -514, -513, -512, -510, -509, -508, -507, -506, -505, -504, -503, -502, -501, 501, 502, 503, 504, 505, 506, 507, 508, 509, 510, 511] are the same as index values of the second guard subcarriers.

14. The method according to any one of claims 1 to 4, wherein the first pilot subcarrier is obtained by mapping a second data subcarrier in the first low frequency channel to the first high frequency channel; or the first pilot subcarrier is obtained by mapping the second pilot subcarrier and the second data subcarrier to the first high frequency channel.

15. The method according to claim 14, wherein index values of the first pilot subcarriers comprise at least one of the following:

[-25, -15, -5, 5, 15];
[-25, -15, -5, 5, 15, 25];
[-28, -20, -12, -4, 4, 12, 20];
[-28, -20, -12, -4, 4, 12, 20, 28];
[-27, -21, -15, -9, -3, 3, 9, 15, 21];
[-27, -21, -15, -9, -3, 3, 9, 15, 21, 27]; and
[-28, -23, -18, -13, -8, -3, 3, 8, 13, 18, 23]; or

index values of the first pilot subcarriers comprise at least one of the following:

[-49, -35, -21, -7, 7, 21, 35];
[-49, -35, -21, -7, 7, 21, 35, 49];
[-54, -42, -30, -18, -6, 6 18, 30, 42];
[-54, -42, -30, -18, -6, 6 18, 30, 42, 54];

[-55, -45, -35, -25, -15, -5, 5, 15, 25, 35, 45];
[-55, -45, -35, -25, -15, -5, 5, 15, 25, 35, 45, 55];
[-52, -44, -36, -28, -20, -12, -4, 4, 12, 20, 28, 36, 44];
[-52, -44, -36, -28, -20, -12, -4, 4, 12, 20, 28, 36, 44, 52];
[-53, -46, -39, -32, -25, -18, -11, -4, 4, 11, 18, 25, 32, 39, 46];
[-53, -46, -39, -32, -25, -18, -11, -4, 4, 11, 18, 25, 32, 39, 46, 53]; and
[-58, -52, -46, -40, -34, -28, -22, -16, -10, -4, 4, 10, 16, 22, 28, 34, 40, 46, 52]; or

index values of the first pilot subcarriers comprise at least one of the following:

[-108, -84, -60, -36, -12, 12, 36, 60, 84];
[-108, -84, -60, -36, -12, 12, 36, 60, 84, 108];
[-110, -90, -70, -50, -30, -10, 10, 30, 50, 70, 90];
[-110, -90, -70, -50, -30, -10, 10, 30, 50, 70, 90, 110];
[-117, -99, -81, -63, -45, -27, -9, 9, 27, 45, 63, 81, 99];
[-117, -99, -81, -63, -45, -27, -9, 9, 27, 45, 63, 81, 99, 117];
[-113, -98, -83, -68, -53, -38, -23, -8, 8, 23, 38, 53, 68, 83, 98];
[-113, -98, -83, -68, -53, -38, -23, -8, 8, 23, 38, 53, 68, 83, 98, 113];
[-113, -98, -85, -72, -59, -46, -33, -20, -7, 7, 20, 33, 46, 59, 72, 85, 98];
[-113, -98, -85, -72, -59, -46, -33, -20, -7, 7, 20, 33, 46, 59, 72, 85, 98, 113]; and
[-114, -102, -90, -78, -66, -54, -42, -30, -18, -6, 6, 18, 30, 42, 54, 66, 78, 90, 102]; or

index values of the first pilot subcarriers comprise at least one of the following:

[-108, -84, -60, -36, -12, 12, 36, 60, 84];
[-108, -84, -60, -36, -12, 12, 36, 60, 84, 108];
[-110, -90, -70, -50, -30, -10, 10, 30, 50, 70, 90];
[-110, -90, -70, -50, -30, -10, 10, 30, 50, 70, 90, 110];
[-117, -99, -81, -63, -45, -27, -9, 9, 27, 45, 63, 81, 99];
[-117, -99, -81, -63, -45, -27, -9, 9, 27, 45, 63, 81, 99, 117];
[-113, -98, -83, -68, -53, -38, -23, -8, 8, 23, 38, 53, 68, 83, 98];
[-113, -98, -83, -68, -53, -38, -23, -8, 8, 23, 38, 53, 68, 83, 98, 113];
[-113, -98, -85, -72, -59, -46, -33, -20, -7, 7, 20, 33, 46, 59, 72, 85, 98];
[-113, -98, -85, -72, -59, -46, -33, -20, -7, 7, 20, 33, 46, 59, 72, 85, 98, 113]; and
[-114, -102, -90, -78, -66, -54, -42, -30, -18, -6, 6, 18, 30, 42, 54, 66, 78, 90, 102]; or

index values of the first pilot subcarriers comprise at least one of the following:

[-229, -202, -175, -148, -121, -94, -67, -40, -13, 13, 40, 67, 94, 121, 148, 175, 202, 229];
[-228, -204, -180, -156, -132, -108, -84, -60, -36, -12, 12, 36, 60, 84, 108, 132, 156, 180, 204, 228];
[-231, -209, -187, -165, -143, -121, -99, -77, -55, -33, -11, 11, 33, 55, 77, 99, 121, 143, 165, 187, 209, 231];
[-230, -210, -190, -170, -150, -130, -110, -90, -70, -50, -30, -10, 10, 30, 50, 70, 90, 110, 130, 150, 170, 190, 210, 230];
[-225, -207, -189, -171, -153, -135, -117, -99, -81, -63, -45, -27, -9, 9, 27, 45, 63, 81, 99, 117, 135, 153, 171, 189, 207, 225];
[-230, -213, -196, -179, -162, -145, -128, -111, -94, -77, -60, -43, -26, -9, 9, 26, 43, 60, 77, 94, 111, 128, 145, 162, 179, 196, 213, 230];
[-232, -216, -200, -184, -168, -152, -136, -120, -104, -88, -72, -56, -40, -24, -8, 8, 24, 40, 56, 72, 88, 104, 120, 136, 152, 168, 184, 200, 216, 232];
[-233, -218, -203, -188, -173, -158, -143, -128, -113, -98, -83, -68, -53, -38, -23, -8, 8, 23, 38, 53, 68, 83, 98, 113, 128, 143, 158, 173, 188, 203, 218, 233];
[-231, -217, -203, -189, -175, -161, -147, -133, -119, -105, -91, -77, -63, -49, -35, -21, -7, 7, 21, 35, 49, 63, 77, 91, 105, 119, 133, 147, 161, 175, 189, 203, 217, 231];
[-228, -215, -202, -189, -176, -163, -150, -137, -124, -111, -98, -85, -72, -59, -46, -33, -20, -7, 7, 20, 33, 46, 59, 72, 85, 98, 111, 124, 137, 150, 163, 176, 189, 202, 215, 228]; and
[-222, -210, -198, -186, -174, -162, -150, -138, -126, -114, -102, -90, -78, -66, -54, - 42, -30, -18, -6, 6, 18, 30, 42, 54, 66, 78, 90, 102, 114, 126, 138, 150, 162, 174, 186, 198, 210, 222]; or

index values of the first pilot subcarriers comprise at least one of the following:

[-476, -420, -364, -308, -252, -196, -140, -84, -28, 28, 84, 140, 196, 252, 308, 364, 420, 476];
[-475, -425, 375, -325, -275, -225, -175, -125, -75, -25, 25, 75, 125, 175, 225, 275, 325, 375, 425, 475];
[-462, -418, -374, -330, -286, -242, -198, -154, -110, -66, -22, 22, 66, 110, 154, 198, 242, 286, 330, 374, 418, 462];
[-483, -441, -399, -357, -315, -273, -231, -189, -147, -105, -63, -21, 21, 63, 105, 147, 189, 231, 273, 315, 357, 399, 441, 483];
[-475, -437, -399, -361, -323, -285, -247, -209, -171, -133, -95, -57, -19, 19, 57, 95, 133, 171, 209, 247, 285, 323, 361, 399, 437, 475];
[-486, -450, -414, -378, -342, -306, -270, -234, -198, -162, -126, -90, -54, -18, 18, 54, 90, 126, 162, 198, 234, 270, 306, 342, 378, 414, 450, 486];
[-478, -445, -412, -379, -346, -313, -280, -247, -214, -181, -148, -115, -82, -49, -16, 16, 49, 82, 115, 148, 181, 214, 247, 280, 313, 346, 379, 412, 445, 478];
[-480, -449, -418, -387, -356, -325, -294, -263, -232, -201, -170, -139, -108, -77, -46, -15, 15, 46, 77, 108, 139, 170, 201, 232, 263, 294, 325, 356, 387, 418, 449, 480];
[-495, -465, -435, -405, -375, 345, -315, -285, -255, -225, -195, 165, -135, -105, -75, -45, -15, 15, 45, 75, 105, 135, 165, 195, 225, 255, 285, 315, 345, 375, 405, 435, 465, 495];
[-490, -462, -434, -406, -378, -350, -322, -294, -266, -238, -210, -182, -154, -126, -98, -70, -42, -14, 14, 42, 70, 98, 126, 154, 182, 210, 238, 266, 294, 322, 350, 378, 406, 434, 462, 490]; and
[-481, -455, -429, -403, -377, -351, -325, -299, -273, -247, -221, -195, -169, -143, -117, -91, -65, -39, -13, 13, 39, 65, 91, 117, 143, 169, 195, 221, 247, 273, 299, 325, 351, 377, 403, 429, 455, 481]; or

index values of the first pilot subcarriers comprise at least one of the following:

[-476, -420, -364, -308, -252, -196, -140, -84, -28, 28, 84, 140, 196, 252, 308, 364, 420, 476];
[-475, -425, -375, -325, -275, -225, -175, -125, -75, -25, 25, 75, 125, 175, 225, 275, 325, 375, 425, 475];
[-462, -418, -374, -330, -286, -242, -198, -154, -110, -66, -22, 22, 66, 110, 154, 198, 242, 286, 330, 374, 418, 462];
[-483, -441, -399, -357, -315, -273, -231, -189, -147, -105, -63, -21, 21, 63, 105, 147, 189, 231, 273, 315, 357, 399, 441, 483];
[-475, -437, -399, -361, -323, -285, -247, -209, -171, -133, -95, -57, -19, 19, 57, 95, 133, 171, 209, 247, 285, 323, 361, 399, 437, 475];
[-486, -450, -414, -378, -342, -306, -270, -234, -198, -162, -126, -90, -54, -18, 18, 54, 90, 126, 162, 198, 234, 270, 306, 342, 378, 414, 450, 486];
[-478, -445, -412, -379, -346, -313, -280, -247, -214, -181, -148, -115, -82, -49, -16, 16, 49, 82, 115, 148, 181, 214, 247, 280, 313, 346, 379, 412, 445, 478];
[-480, -449, -418, -387, -356, -325, -294, -263, -232, -201, -170, -139, -108, -77, -46, -15, 15, 46, 77, 108, 139, 170, 201, 232, 263, 294, 325, 356, 387, 418, 449, 480];
[-495, -465, -435, -405, -375, -345, -315, -285, -255, -225, -195, -165, -135, -105, -75, -45, -15, 15, 45, 75, 105, 135, 165, 195, 225, 255, 285, 315, 345, 375, 405, 435, 465, 495];
[-490, -462, -434, -406, -378, -350, -322, -294, -266, -238, -210, -182, -154, -126, -98, -70, -42, -14, 14, 42, 70, 98, 126, 154, 182, 210, 238, 266, 294, 322, 350, 378, 406, 434, 462, 490]; and
[-481, -455, -429, -403, -377, -351, -325, -299, -273, -247, -221, -195, -169, -143, -117, -91, -65, -39, -13, 13, 39, 65, 91, 117, 143, 169, 195, 221, 247, 273, 299, 325, 351, 377, 403, 429, 455, 481].

16. The method according to any one of claims 1 to 15, wherein a bandwidth of the first low frequency channel comprises at least one of the following: 20 MHz, 40 MHz, and 80 MHz; and a bandwidth of the first high frequency channel comprises at least one of the following: 270 MHz, 320 MHz, 540 MHz, 1080 MHz, 2160 MHz, 4320 MHz, and 8640 MHz.

17. A communication apparatus, wherein the apparatus comprises:

a processing unit, configured to generate a physical layer protocol data unit PPDU; and
a transceiver unit, configured to send the PPDU on a first high frequency channel, wherein the first high frequency channel comprises a first pilot subcarrier and a first data subcarrier, a discrete Fourier transform DFT size corresponding to the first high frequency channel is the same as a DFT size corresponding to a first low frequency channel, a quantity of first pilot subcarriers is greater than a quantity of second pilot subcarriers in the first low frequency channel, and a quantity of first data subcarriers is equal to a quantity of second data subcarriers in the first low frequency channel.

18. A communication apparatus, wherein the apparatus comprises:

a transceiver unit, configured to receive the PPDU on a first high frequency channel, wherein the first high frequency channel comprises a first pilot subcarrier and a first data subcarrier, a discrete Fourier transform DFT size corresponding to the first high frequency channel is the same as a DFT size corresponding to a first low frequency channel, a quantity of first pilot subcarriers is greater than a quantity of second pilot subcarriers in the first low frequency channel, and a quantity of first data subcarriers is equal to a quantity of second data subcarriers in the first low frequency channel; and
a processing unit, configured to process the PPDU.

19. The apparatus according to claim 18, wherein the processing unit is specifically configured to: obtain, based on an index value of the first pilot subcarrier, a pilot signal in the PPDU on the first pilot subcarrier corresponding to the index value; and perform processing based on the pilot signal.

20. The apparatus according to claim 19, wherein the processing unit is specifically configured to:

perform phase offset estimation and/or compensation based on the pilot signal; and
perform frequency offset estimation and/or compensation based on the pilot signal.

21. A communication apparatus, comprising a processor and a memory, wherein

the memory is configured to store instructions; and
the processor is configured to execute the instructions, to perform the method according to any one of claims 1 to 16.

22. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 16.

23. A computer-readable storage medium, wherein the computer-readable storage medium is configured to store a computer program, and when the computer program is executed, the method according to any one of claims 1 to 16 is performed.

24. A computer program, wherein when the computer program is executed, the method according to any one of claims 1 to 16 is performed.

25. A communication system, comprising a transmit end and a receive end, wherein the transmit end is configured to perform the method according to any one of claims 1 and 5 to 16, and the receive end is configured to perform the method according to any one of claims 2 to 16.

FIG. 1

Transmit end

Receive end

Generate a PPDU 201

PPDU 202

Process the PPDU 203

FIG. 2

FIG. 3a

| Descrambling (descrambler) | | Descrambling (descrambler) |
|:---:|:---:|:---:|

↑

| LDPC decoding (decoder) | | LDPC decoding (decoder) |
|:---:|:---:|:---:|

↑

| Constellation demapping (constellation demapper) | ... | Constellation demapping (constellation demapper) |
|:---:|:---:|:---:|

↑

| Deinterleaving (demapper) | ... | Deinterleaving (demapper) |
|:---:|:---:|:---:|

↑

| Pilot signal processing, channel estimation, and channel equalization |
|:---:|

↑

| Discrete Fourier transform (DFT) | ... | Discrete Fourier transform (DFT) |
|:---:|:---:|:---:|

↑

| Cyclic prefix removal | ... | Cyclic prefix removal |
|:---:|:---:|:---:|

↑

| Analog and radio frequency (analog and RF) | ... | Analog and radio frequency (analog and RF) |
|:---:|:---:|:---:|

FIG. 3b

FIG. 4

FIG. 5

FIG. 6

FIG. 7

## INTERNATIONAL SEARCH REPORT

| International application No. |
| --- |
| **PCT/CN2023/094916** |

| A. | CLASSIFICATION OF SUBJECT MATTER |
| --- | --- |
| | H04L5/00(2006.01)i |

According to International Patent Classification (IPC) or to both national classification and IPC

| B. | FIELDS SEARCHED |
| --- | --- |

Minimum documentation searched (classification system followed by classification symbols)

IPC:H04L H04B

Documentation searched other than minimum documentation to the extent that such documents are included in the fields searched

Electronic data base consulted during the international search (name of data base and, where practicable, search terms used)

CNTXT, ENTXT, CNKI, 3GPP, IEEE: 导频, 子载波, 低频, 傅里叶, 高频, 索引, 物理层协议数据, 信道, 尺寸, 大小, size, DFT, PPDU, pilot, data, index, PHY

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2017033960 A1 (LG ELECTRONICS INC.) 02 February 2017 (2017-02-02) description, paragraphs 24-98 | 1-25 |
| A | CN 111148243 A (HUAWEI TECHNOLOGIES CO., LTD.) 12 May 2020 (2020-05-12) entire document | 1-25 |
| A | CN 112448803 A (HUAWEI TECHNOLOGIES CO., LTD.) 05 March 2021 (2021-03-05) entire document | 1-25 |
| A | CN 114071725 A (HUAWEI TECHNOLOGIES CO., LTD.) 18 February 2022 (2022-02-18) entire document | 1-25 |
| A | WO 2021235753 A1 (LG ELECTRONICS INC.) 25 November 2021 (2021-11-25) entire document | 1-25 |
| A | HUAWEI et al. "Channel access mechanism for 60 GHz unlicensed operation" *3GPP TSG RAN WG1 Meeting #103-e R1-2007605*, 13 November 2020 (2020-11-13), entire document | 1-25 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 June 2023** | **21 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/094916**

| Patent document cited in search report | | | Publication date (day/month/year) | Patent family member(s) | | | Publication date (day/month/year) |
|---|---|---|---|---|---|---|---|
| US | 2017033960 | A1 | 02 February 2017 | WO | 2015160102 | A1 | 22 October 2015 |
| | | | | EP | 3133788 | A1 | 22 February 2017 |
| | | | | KR | 20160135750 | A | 28 November 2016 |
| CN | 111148243 | A | 12 May 2020 | US | 2021258960 | A1 | 19 August 2021 |
| | | | | WO | 2020093890 | A1 | 14 May 2020 |
| CN | 112448803 | A | 05 March 2021 | WO | 2021043111 | A1 | 11 March 2021 |
| | | | | EP | 4024724 | A1 | 06 July 2022 |
| | | | | US | 2022263611 | A1 | 18 August 2022 |
| CN | 114071725 | A | 18 February 2022 | WO | 2022022249 | A1 | 03 February 2022 |
| | | | | EP | 4185047 | A1 | 24 May 2023 |
| WO | 2021235753 | A1 | 25 November 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210545847